(19) Europäisches Patentamt
European Patent Office
Office européen des brevets

(11) **EP 4 570 865 A1**

(12) **EUROPÄISCHE PATENTANMELDUNG**

(43) Veröffentlichungstag:
**18.06.2025 Patentblatt 2025/25**

(21) Anmeldenummer: 23217030.8

(22) Anmeldetag: **15.12.2023**

(51) Internationale Patentklassifikation (IPC):
***C09D 5/18*** *(2006.01)*

(52) Gemeinsame Patentklassifikation (CPC):
**C09D 5/185; C09D 5/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder:
• **Bamberger, Julia**
**80636 München (DE)**
• **Simon, Sebastian**
**86807 Buchloe Lindenberg (DE)**
• **Kanokwijitsilp, Thananthorn**
**86899 Landsberg am Lech (DE)**

• **Farras Gutierrez, Hector**
**86507 Oberottmarshausen (DE)**
• **Mayr, Florian**
**86444 Affing (DE)**
• **Schmidt, Marco**
**67346 Speyer (DE)**
• **Sauter, Daniel**
**66892 Bruchmühlbach-Miesau (DE)**
• **Gattermayer, Jochen**
**64409 Messel (DE)**
• **Willerich, Immanuel**
**67117 Limburgerhof (DE)**

(74) Vertreter: **Hilti Aktiengesellschaft**
**Corporate Intellectual Property**
**Feldkircherstrasse 100**
**Postfach 333**
**9494 Schaan (LI)**

(54) **WÄSSRIGE BRANDSCHUTZZUSAMMENSETZUNG MIT HOHER ANWENDUNGSSCHICHTDICKE UND BRANDSCHUTZBESCHICHTUNG MIT VERBESSERTER WIDERSTANDSFÄHIGKEIT GEGEN SCHIMMELBILDUNG**

(57) Es wird eine wässrige Brandschutzzusammensetzung mit einer schnellen Erhärtung auch in hoher Schichtstärke beschrieben, die ein Bindemittel auf Basis eines wässrigen Polymerlatex eines filmbildenden carboxylierten Polymers, ein verzweigtes Polyetheraminpolyol mit im Wesentlichen tertiären Aminogruppen enthält, sowie eine aus der wässrigen Brandschutzzusammensetzung hergestellte Brandschutzbeschichtung mit einer verbesserten Widerstandsfähigkeit gegen Schimmelbildung. Ferner wird die Verwendung der Brandschutzzusammensetzung für den Brandschutz, insbesondere für Beschichtungen von Bauteilen, wie Stützen, Trägern, oder Fachwerkstäben, beschrieben.

EP 4 570 865 A1

**Beschreibung**

Die vorliegende Erfindung betrifft eine wässrige Brandschutzzusammensetzung mit einer schnellen Erhärtung auch in hoher Schichtstärke, die ein Bindemittel auf Basis eines wässrigen Polymerlatex eines filmbildenden carboxylierten Polymers, ein verzweigtes Polyetheraminpolyol mit im Wesentlichen tertiären Aminogruppen enthält, sowie eine aus der wässrigen Brandschutzzusammensetzung hergestellte Brandschutzbeschichtung mit einer verbesserten Widerstandsfähigkeit gegen Schimmelbildung. Die Erfindung betrifft ferner die Verwendung der Brandschutzzusammensetzung für den Brandschutz, insbesondere für Beschichtungen von Bauteilen, wie Stützen, Trägern, oder Fachwerkstäben.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90, F120 und F180 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120, 180 Minuten oder bis zu 240 Minuten erreicht wird. Wesentlich für den erreichbaren Feuerwiderstand ist immer die aufgebrachte Schichtdicke der Beschichtung, bzw. die sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren bereits verschiedene Systeme, wobei ein großer Teil der am Markt erhältlichen Produkte auf Basis von wasserbasierten Dispersionen erhältlich ist.

In der Patentschrift WO 2019/099372 A1 werden wässrige Beschichtungszusammensetzungen auf Basis von polymeren Bindemitteln mit mindestens einem Koaleszenzmittel und mit einem oder mehreren Additiven aus der Gruppe der Intumeszenzadditive, der Antivibrationsadditive sowie der schallentkoppelnde Additive beschrieben. Dabei wird das polymere Bindemittel in einer ersten Komponente und das Koagulationsmittel in einer zweiten Komponente bereitgestellt. Das (die) Additiv(e) können in der ersten Komponente, in der zweiten Komponente oder sowohl in der ersten als auch in der zweiten Komponente enthalten sein. Bei direkt aufeinanderfolgender oder simultaner Applikation der beiden Komponenten auf ein zu beschichtendes Substrat wird innerhalb von 30 Sekunden nach Auftrag eine Beschichtung ausgebildet, die haftend, standfest, wasserbeständig sowie nicht oberflächenklebrig (trocken) ist.

In öffentlich zugänglichen Einrichtungen, wie Sportstadien, Wolkenkratzern, Flughäfen, Bahnhöfen oder Verwaltungsgebäuden, aber auch im privaten Bereich wird u.a. aus Kostengründen immer häufiger auf einen ästhetischen Deckanstrich verzichtet, so dass Brandschutzbeschichtungen immer häufiger auch ästhetische Gesichtspunkte erfüllen müssen und daher gute bis sehr gute Oberflächeneigenschaften aufweisen müssen.

Die in der WO 2019/099372 A1 offenbarten Zusammensetzungen zeigen in Bezug auf intumeszierende Beschichtungen eine schnelle Aushärtung und erlauben eine hohe Beschichtungsdicke. Die entsprechenden Zusammensetzungen zeigen jedoch Nachteile hinsichtlich der Stabilität der Aschekruste im Brandfall sowie hinsichtlich ihrer Oberflächenbeschaffenheit. Zur Verbesserung der Stabilität der Aschekruste im Brandfall wird üblicherweise der Anteil an intumeszierenden Additiven in der Zusammensetzung erhöht und es kommen üblicherweise mehr als 50 Gew.-% bezogen auf das Gesamtgewicht der Zusammensetzung zum Einsatz. Der daraus resultierende hohe Feststoffanteil führt jedoch dazu, dass die Oberflächenrauigkeit der resultierenden ausgehärteten Beschichtung, insbesondere wenn die Zusammensetzung per Hand oder Sprühen appliziert wurde, mit steigendem Feststoffanteil zunimmt. Mit zunehmender Oberflächenrauigkeit nimmt der Glanz der ausgehärteten Beschichtung ab. Im Sinne der vorliegenden Erfindung wird die Kombination aus Oberflächenrauigkeit und Glanz zusammenfassend als Oberflächeneigenschaft bezeichnet. Eine niedrige Oberflächenrauigkeit und ein hoher Glanz entsprechen demnach einer sehr guten Oberflächeneigenschaft.

Die in der WO 2019/099372 A1 offenbarte Anwendung der Brandschutz-Beschichtung als zweikomponentiges System (A+B) bringt einige Nachteile in der Anwendung mit sich. So ist grundsätzlich die Handhabung von zweikomponentigen Spritzgeräten im Baustelleneinsatz aufwändig und daher sind einkomponentige Lösungen von den Anwendern bevorzugt. Weiterhin führt die Trennung von Bindemittelzusammensetzung und Koagulant in den zwei wässrigen Einzelkomponenten zu einem erhöhten Wasseranteil in der Kombinationsmischung.

Das führt zu verlängerten Trocknungszeiten, auch wenn die Aushärtung der Bindemittelzusammensetzung an sich sehr rasch verläuft. Bindemittelzusammensetzungen mit möglichst hohem Feststoffgehalt und möglichst geringem Wasseranteil sind von Vorteil.

Ferner zeigen die in der WO 2019/099372 A1 beschriebenen Zusammensetzungen auch Nachteile hinsichtlich ihrer Lagerstabilität und die Zusammensetzungen selbst sowie die daraus hergestellten Beschichtungen haben eine geringe Widerstandsfähigkeit gegen Schimmelbildung, da der in der Zusammensetzung zwingend enthaltene, teils wasserlösliche Kohlenstofflieferant eine gute Nahrungsquelle für Mikroorganismen darstellt. Diese Eigenschaften sind jedoch essenziell für intumeszierende Beschichtungsmittelzusammensetzungen, um zum einen dem Kunden Transport- und Lagermöglichkeiten gewährleisten zu können als auch eine jahrelange Funktionsfähigkeit der Beschichtung sicherstellen zu können.

Es besteht Bedarf an einer Zusammensetzung, die trotz eines hohen Feststoffanteils von 50 Gew.-% und mehr bezogen auf das Gesamtgewicht der Zusammensetzung, eine gute Verarbeitbarkeit zeigt. Die aus der Zusammensetzung hergestellte Beschichtung soll zudem eine gute Feuerwiderstandsdauer aufweisen und gute bis sehr gute Oberflächeneigenschaften, insbesondere eine geringe Oberflächenrauigkeit und ansprechende Glanzeigenschaften, aufweisen. Ferner besteht Bedarf an einer wässrigen Brandschutzzusammensetzung und einer Brandschutzbeschichtung, die eine sehr geringe Anfälligkeit gegen Schimmelbildung aufweist.

Es ist daher Aufgabe der vorliegenden Erfindung eine wässrige Brandschutzzusammensetzung bereitzustellen, die die Nachteile des Standes des Technik überwinden. Insbesondere besteht Bedarf an wässrigen Brandschutzzusammensetzungen, die auch bei hohen Schichtdicken eine ausreichend schnelle Durchhärtung bieten, um mit möglichst wenig Arbeitsgängen ausreichende funktionelle Schichtdicken bereitzustellen. Ferner ist es Aufgabe der vorliegenden Erfindung die Widerstandsfähigkeit der wässrigen Brandschutzzusammensetzung selbst sowie der aus der Brandschutzzusammensetzung hergestellten Beschichtung gegenüber Schimmelbildung zu verbessern.

Die der Erfindung zugrundeliegende Aufgabe wird durch eine wässrige Brandschutzzusammensetzung gemäß Anspruch 1 gelöst. Vorteilhafte Ausgestaltungen ergeben sich aus den Unteransprüchen, welche wahlweise miteinander kombiniert werden können.

Die der Erfindung zugrundeliegende Aufgabe wird gelöst, durch eine wässrige Brandschutzzusammensetzung umfassend ein Polymer als wässriges Bindemittel, welches

(a) einen wässrigen Polymerlatex eines filmbildenden carboxylierten Polymers;

(b) 0,05 bis 7,5 Gew.%, bezogen auf das Trockengewicht des carboxylierten Polymers, eines verzweigten Polyetheraminpolyols, gelöst in der wässrigen Phase des Polymerlatex, wobei mindestens 90% aller Aminogruppen in dem verzweigten Polyetheraminpolyol tertiäre Amingruppen sind, und

wobei der wässrige Polymerlatex des carboxylierten Polymers erhältlich ist durch eine radikalische Emulsionspolymerisation einer Monomerzusammensetzung M, wobei die Monomerzusammensetzung M umfasst,

i) 70 Gew.-% bis 99,95 Gew.-%, bezogen auf das Gesamtgewicht der Monomerzusammensetzung M, eines oder mehrerer ethylenisch ungesättigter Monomere M1, die ausgewählt sind aus $C_1$-$C_{20}$-Alkylestern von mono-ethylenisch ungesättigten Monocarbonsäuren mit 3 bis 6 Kohlenstoffatomen, di-$C_1$-$C_{20}$-Alkylester von mono-ethylenisch ungesättigten Dicarbonsäuren mit 4 bis 6 C-Atomen, $C_5$-$C_{20}$-Cycloalkylester von monoethylenisch ungesättigte Monocarbonsäuren mit 3 bis 6 C-Atomen, Vinylester von $C_1$-$C_{20}$-Alkansäuren, vinylaromatische Monomere, $C_2$-$C_6$-Monoolefine und Butadien;

ii) 0,05 Gew.-% bis 10 Gew.-%, bezogen auf das Gesamtgewicht der Monomerzusammensetzung M, eines oder mehrerer monoethylenisch ungesättigter Monomere M2, die ausgewählt sind aus monoethylenisch ungesättigten Monocarbonsäuren mit 3 bis 6 Kohlenstoffatomen und monoethylenisch ungesättigten Dicarbonsäuren Säuren mit 4 bis 6 Kohlenstoffatomen;

iii) 0 Gew.-% bis 20 Gew.-%, bezogen auf das Gesamtgewicht der Monomerzusammensetzung M, eines oder mehrerer nichtionischer Monomere M3, die von den Monomeren M1 verschieden sind, umfasst,

mindestens ein intumeszierend wirkendes Brandschutzadditiv und mindestens eine Verbindung zur Verbesserung der Mikroorganismenbeständigkeit.

Vorteilhafte Ausgestaltungen ergeben sich aus den Unteransprüchen, welche wahlweise miteinander kombiniert werden können.

Ein weiterer Aspekt der vorliegenden Erfindung betrifft die Verwendung der wässrigen Brandschutzzusammensetzung als eine Brandschutzbeschichtung, insbesondere intumeszierende Brandschutzbeschichtung.

Ein noch weiterer Aspekt der vorliegenden Erfindung betrifft ein Verfahren zur Herstellung einer Beschichtung auf einer Oberfläche, umfassend das Auftragen der Brandschutz-Zusammensetzung, wie hierin definiert, auf die Oberfläche und Erhärten lassen der Zusammensetzung, um die Beschichtung herzustellen.

Zum besseren Verständnis der Erfindung werden die folgenden Erläuterungen der hierin verwendeten Terminologie als sinnvoll erachtet. Im Sinne der Erfindung:

- bedeutet *"chemische Intumeszenz"* die Bildung einer voluminösen, isolierenden Ascheschicht durch aufeinander abgestimmte Verbindungen, die bei Hitzeeinwirkung miteinander reagieren;

- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;

- bedeutet *"dämmschichtbildend"* oder *"intumeszierend wirkend",* dass im Brandfall ein fester mikroporöser Kohleschaums entsteht, so dass die gebildete feinporige und dicke Schaumschicht, die sogenannte Aschekruste, je nach Zusammensetzung ein Substrat gegen Hitze isoliert;

- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;

- ist ein *"Dehydrierungskatalysator"* eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;

- ist ein *"Treibmittel"* eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das Erweichte Bindemittel zu einem Schaum aufbläht (Intumeszenz); dieser Begriff wird gleichbedeutend mit *"Gasbildner"* verwendet;

- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.

- geben die Präfixe "$C_n$-$C_m$", die in Verbindung mit Verbindungen oder Moleküleinheiten verwendet werden, jeweils einen Bereich für die Anzahl möglicher Kohlenstoffatome an, die eine Moleküleinheit oder eine Verbindung haben kann.

- bezeichnet *"$C_1$-$C_n$-Alkyl"* bezeichnet eine Gruppe von linearen oder verzweigten gesättigten Kohlenwasserstoffresten mit 1 bis n Kohlenstoffatomen. Beispielsweise bezeichnet der Begriff $C_1$-$C_{20}$-Alkyl eine Gruppe von linearen oder verzweigten gesättigten Kohlenwasserstoffresten mit 1 bis 20 Kohlenstoffatomen. Ähnlich bezeichnet der Begriff $C_5$-$C_{20}$-Alkyl eine Gruppe von linearen oder verzweigten gesättigten Kohlenwasserstoffresten mit 5 bis 20 Kohlenstoffatomen, während der Begriff $C_1$-$C_4$-Alkyl eine Gruppe von linearen oder verzweigten gesättigten Kohlenwasserstoffresten mit 1 bis 4 Kohlenstoffatomen bezeichnet. Beispiele für Alkyl schließen Methyl, Ethyl, n-Propyl, Isopropyl, n-Butyl, 2-Butyl, 2-Methylpropyl (Isopropyl), 1,1-Dimethylethyl (tert.-Butyl), Pentyl, 1-Methylbutyl ein, sind aber nicht darauf beschränkt, 2-Methylbutyl, 3-Methylbutyl, 2,2-Dimethylpropyl, 1-Ethylpropyl, 1,1- Dimethylpropyl, 1,2-Dimethylpropyl, 1-Methylpentyl, 2- Methylpentyl, 3-Methylpentyl, 4- Methylpentyl, 1,1-Dimethylbutyl, 1,2-Dimethylbutyl, 1,3-Dimethylbutyl, 2,2-Dimethylbutyl, 2,3- Dimethylbutyl, 3,3-Dimethylbutyl, 1-Ethylbutyl, 2-Ethylbutyl, 1,1,2-Trimethylpropyl, 1,2,2- Trimethylpropyl, 1-Ethyl-1-methylpropyl, 1-Ethyl-2-methylpropyl, Hexyl, Heptyl, Octyl, 2- Ethylhexyl, Nonyl, Decyl, Undecyl, Dodecyl, Tridecyl, Tetradecyl, Pentadecyl, Hexadecyl, Heptadecyl, Octadecyl, Nonadecyl, Eicosyl, Heneicosyl, Docosyl und ihre Isomere. $C_1$-$C_4$- Alkyl bedeutet beispielsweise Methyl, Ethyl, Propyl, 1-Methylethyl, Butyl, 1-Methylpropyl, 2- Methylpropyl oder 1,1-Dimethylethyl.

- umfasst der Begriff *"(Meth)acryl"* sowohl Acryl- als auch Methacrylgruppen. Daher schließt der Begriff "(Meth)acrylat" Acrylat und Methacrylat ein.

- werden die Begriffe *"Polymerlatex"* und *"Polymerdispersion"* als Synonyme verwendet und bedeuten eine wässrige Polymerzusammensetzung eines wasserunlöslichen Polymers, wobei das Polymer in Form von fein dispergierten Polymerpartikeln vorliegt. Üblicherweise ist der Polymerlatex durch Emulsionspolymerisation (auch als Primärlatex bezeichnet) erhältlich, er kann aber auch durch Emulgieren eines Polymers in einer wässrigen Phase (Sekundärlatex) erhältlich sein.

- der Begriff *"Polyetheraminpolyof"* ein Polymer mit Amingruppen, Ethergruppen und Hydroxylgruppen.

- ist der Begriff *"pphm"* die Abkürzung für "Teile pro hundert Monomere" und ist der Gewichtsanteil, bezogen auf das Gesamtgewicht der Monomere in der jeweiligen Zusammensetzung.

- ist der Bereich "*x bis y Gew.-%*" ein Synonym für den Bereich "*x Gew.-% bis y Gew.*-%". Ebenso ist der Bereich "*x bis y Mol-%*" ein Synonym für den Bereich "*x Mol-% bis y Mol-%*. Zur Klarstellung sei darauf hingewiesen, dass dies auch für Bereiche gilt, die in "mol/kg", "mg KOH/g", "g/mol", "pphm", "°C" und dergleichen angegeben sind.

Ein Gegenstand der Erfindung ist eine wässrige Brandschutzzusammensetzung umfassend ein Polymer als wässriges Bindemittel, welches

(a) einen wässrigen Polymerlatex eines filmbildenden carboxylierten Polymers;

(b) 0,05 bis 7,5 Gew.%, bezogen auf das Trockengewicht des carboxylierten Polymers, eines verzweigten Polyetheraminpolyols, gelöst in der wässrigen Phase des Polymerlatex, wobei mindestens 90% aller Aminogruppen in dem verzweigten Polyetheraminpolyol tertiäre Amingruppen sind, und
wobei der wässrige Polymerlatex des carboxylierten Polymers erhältlich ist durch eine radikalische Emulsionspolymerisation einer Monomerzusammensetzung M, wobei die Monomerzusammensetzung M umfasst,

i) 70 Gew.-% bis 99,95 Gew.-%, bezogen auf das Gesamtgewicht der Monomerzusammensetzung M, eines oder mehrerer ethylenisch ungesättigter Monomere M1, die ausgewählt sind aus $C_1$-$C_{20}$-Alkylestern von monoethylenisch ungesättigten Monocarbonsäuren mit 3 bis 6 Kohlenstoffatomen, di-$C_1$-$C_{20}$-Alkylester von monoethylenisch ungesättigten Dicarbonsäuren mit 4 bis 6 C-Atomen, $C_5$-$C_{20}$-Cycloalkylester von monoethylenisch ungesättigte Monocarbonsäuren mit 3 bis 6 C-Atomen, Vinylester von $C_1$-$C_{20}$-Alkansäuren, vinylaromatische Monomere, $C_2$-$C_6$-Monoolefine und Butadien;

ii) 0,05 Gew.-% bis 10 Gew.-%, bezogen auf das Gesamtgewicht der Monomerzusammensetzung M, eines oder mehrerer monoethylenisch ungesättigter Monomere M2, die ausgewählt sind aus monoethylenisch ungesättigten Monocarbonsäuren mit 3 bis 6 Kohlenstoffatomen und monoethylenisch ungesättigten Dicarbonsäuren Säuren mit 4 bis 6 Kohlenstoffatomen;

iii) 0 Gew.-% bis 20 Gew.-%, bezogen auf das Gesamtgewicht der Monomerzusammensetzung M, eines oder mehrerer nichtionischer Monomere M3, die von den Monomeren M1 verschieden sind, umfasst,

mindestens ein intumeszierend wirkendes Brandschutzadditiv und mindestens eine Verbindung zur Verbesserung der Mikroorganismenbeständigkeit, wobei der Anteil der Verbindung zur Verbesserung der Mikroorganismenbeständigkeit von 0,05 bis 0,30 Gew.-%, bezogen auf das Gesamtgewicht der wässrigen Brandschutzzusammensetzung, beträgt.

*Wässriges Bindemittel*

Es wurde insbesondere gefunden, dass die verzweigten Polyetheraminpolyole, wie hierin definiert, die Abhängigkeit der Trocknungseigenschaften von Brandschutzbeschichtungen auf Basis von wässrigem Polymerlatex von filmbildenden carboxylierten Polymeren von der Anwendungstemperatur verringern bzw. beseitigen. Daher können Bindemittel, umfassend eine Kombination aus einem verzweigten Polyetheraminpolyol wie hierin definiert, und einem wässrigen Polymerlatex eines filmbildenden carboxylierten Polymers zur Herstellung von Brandschutzzusammensetzungen verwendet werden, die ein von der Anwendungstemperatur nahezu unabhängiges Trocknungsverhalten aufweisen und die daher eine beschleunigte Trocknung bei üblichen Baustellen-Temperaturen bieten. Die erfindungsgemäße Brandschutzzusammensetzung zeichnet sich weiterhin durch eine besonders schnelle Aushärtung auch in hoher Schichtstärke aus.

Ein genereller Nachteil solch wässriger Systeme, insbesondere beim Einsatz für Brandschutzbeschichtungen, die Nassschichtdicken von 3 mm oder mehr erfordern, ist die rein physikalische Trocknung der Beschichtungsmasse.

Die Trocknungsgeschwindigkeit einer wässrigen Brandschutzbeschichtung, insbesondere für den konstruktiven Rohbau, ist stark abhängig von den Witterungsbedingungen, insbesondere der Luftfeuchtigkeit, Temperatur und Windgeschwindigkeit beim Auftragen der Beschichtung. Wenn beispielsweise die Trocknungsgeschwindigkeit zu niedrig ist, zum Beispiel aufgrund niedriger Temperatur und/oder hoher Luftfeuchtigkeit, kann ein plötzlicher Regen die Beschichtung beschädigen. Zusätzlich kann eine erhöhte Anschmutzungsneigung vorliegen, die dann zu reduzierter Ästhetik führen kann. Im Gegensatz dazu kann eine hohe Trocknungsgeschwindigkeit, zum Beispiel bei erhöhten Temperaturen und/oder niedrigen Luftfeuchtigkeitsbedingungen, zu kurzen Offenzeiten führen, was zu Problemen beim Auftragen der Beschichtung unter diesen Bedingungen führen kann. Daher besteht die Notwendigkeit, die Trocknungsgeschwindigkeit einer Brandschutzbeschichtung zu steuern, die weniger von den Wetterbedingungen abhängt.

Ein Nachteil derartiger physikalisch härtender Brandschutz-Zusammensetzungen auf Basis wässriger Dispersionen besteht darin, dass sie vor der Aushärtung eine unzureichende Beständigkeit gegen Schlagregen aufweisen. Der Begriff "Niederschlag" bezeichnet einen starken Regen, dessen Tröpfchen in den noch nicht ausreichenden Oberflächenbereichen in Abhängigkeit von der Tröpfchengröße und der Windgeschwindigkeit zu Schäden an der noch nicht ausgehärteten Beschichtungszusammensetzung führen können.

Durch die erfindungsgemäß erreichte schnellere Aushärtung kann die benötigte frühere Schlagregenfestigkeit erreicht werden und somit eine intakte Beschichtung gewährleistet werden, die trotzdem eine ausreichende Wasserdampfdurchlässigkeit aufweist und somit die notwendige Durchtrocknung über die gesamte Schichtdicke zulässt und dadurch eine ausgehärtete Trockenbeschichtung ergibt, die den gewünschten Brandschutz und damit die wesentlichen Anforderungen an die Brandschutzeigenschaften der Brandschutz-Zusammensetzung sicherstellt.

Die erfindungsgemäße wässrige Brandschutzzusammensetzung, eignet sich insbesondere zum Modifizieren der Erhärtungsgeschwindigkeit der Brandschutzzusammensetzungen.

Besonders vorteilhaft wird die erfindungsgemäße Brandschutzzusammensetzung auf einen pH-Wert eingestellt im Bereich von 7,5 bis 9,0, vorzugsweise 8,0 bis 8,5, mit Ammoniak oder einem bei Umgebungstemperatur leicht flüchtigen Aminoalkohol, wie Ethanolamin.

Die erfindungsgemäße Brandschutzzusammensetzung, ist zudem über längere Zeiträume, wie zum Beispiel mehr als 14 Tage, stabil und neigt nicht zur Agglomeratbildung bei Lagerung.

Die Erfindung betrifft weiterhin eine aus der Brandschutz-Zusammensetzung hergestellte Beschichtung und ein mit der Beschichtung beschichtetes Substrat.

Erfindungsgemäß enthält die Bindemittelzusammensetzung einen wässrigen Polymerlatex aus einem carboxylierten Polymer und mindestens einem verzweigten Polyetheraminpolyol. Das verzweigte Polyetheraminpolyol wird in der wässrigen Phase des Polymerlatex gelöst. Daher ist das Polyetheraminpolyol zumindest bis zu einem gewissen Grad wasserlöslich.

*Verzweigter Polyetheraminpolyol*

Die Wasserlöslichkeit des verzweigten Polyetheraminpolyols beträgt vorzugsweise mindestens 5 g/l, stärker bevorzugt mindestens 10 g/l, insbesondere mindestens 50 g/l, insbesondere 100 g/l, bei 20°C.

Insbesondere ist das verzweigte Polyetheraminpolyol bei 20°C vollständig mit Wasser mischbar.

In dem verzweigten Polyetheraminpolyol, dass in der wässrigen Phase des Polymerlatex gelöst ist, sind im Wesentlichen alle Aminogruppen tertiäre Amingruppen. In diesem Zusammenhang bedeutet der Begriff "im Wesentlichen", dass mindestens 90 %, vorzugsweise mindestens 95 %, stärker bevorzugt mehr als 98 % und noch stärker bevorzugt mehr als 99 % der Aminogruppen in dem verzweigten Polyetheraminpolyol tertiäre Amingruppen sind. Insbesondere weist das verzweigte Polyetheraminpolyol keine nachweisbaren Mengen an sekundären und primären Aminogruppen auf. Somit sind in dem in der wässrigen Phase des Polymerlatex gelösten verzweigten Polyetheraminpolyol alle Aminogruppen in dem verzweigten Polyetheraminpolyol tertiäre Amingruppen. Häufig sind diese verzweigt.

Polyetheraminpolyol enthält im Durchschnitt weniger als 0,5 Mol/kg sekundäre und primäre Aminogruppen, sofern vorhanden. Insbesondere enthält das Polyetheraminpolyol im Durchschnitt weniger als 0,2 Mol/kg, insbesondere weniger als 0,1 Mol/kg an gegebenenfalls vorhandenen sekundären und primären Aminogruppen.

Häufig enthält das verzweigte Polyetheraminpolyol durchschnittlich 4 bis 8,2 mol/kg tertiäre Aminogruppen. Insbesondere enthält das Polyetheraminpolyol durchschnittlich 5 bis 8,0 Mol/kg tertiäre Aminogruppen, insbesondere 5 bis 7,9 Mol/kg.

Die Aminzahl von Polyetheraminpolyol liegt vorzugsweise im Bereich von 100 bis 700 mg KOH/g, am meisten bevorzugt im Bereich von 200 bis 500 mg KOH/g, bestimmt nach dem in DIN EN ISO 9702:1998 beschriebenen Verfahren. Neben der Bestimmung des Gesamtgehalts an Amingruppen ermöglicht dieses Verfahren die Bestimmung des Gehalts an tertiären Amingruppen, des Gehalts an sekundären Amingruppen und des Gehalts an primären Amingruppen.

Neben den Aminogruppen enthält das Polyetheraminpolyol Hydroxylgruppen. Die OH-Zahl des Polyetheraminpolyols beträgt häufig mindestens 100 mg KOH/g, z. B. 100 bis 800 mg KOH/g, insbesondere mindestens 200 mg KOH/g, z. B. 200 bis 700 mg KOH/g, insbesondere mindestens 250 mg KOH/g, z.B. 250 bis 650 mg KOH/g, bestimmt nach DIN 53240, Teil 2. Die Zahl der Hydroxylgruppen pro Molekül richtet sich nach dem zahlenmittleren Molekulargewicht des verzweigten Polyetheraminpolyols und dem Verzweigungsgrad. Häufig enthält das verzweigte Polyetheraminpolyol im Mittel (Zahlenmittel) mindestens vier, besonders bevorzugt mindestens sechs, besonders bevorzugt mindestens zehn Hydroxylgruppen pro Molekül. Die Anzahl der endständigen oder seitenständigen funktionellen Gruppen ist prinzipiell nach oben unbegrenzt. Vorzugsweise enthält das verzweigte Polyetheraminpolyol im Mittel (Zahlenmittel) höchstens 500, insbesondere höchstens 200 endständige Hydroxylgruppen pro Molekül.

Das zahlenmittlere Molgewicht Mn von verzweigtem Polyetheraminpolyol liegt häufig im Bereich von 500 bis 55000 g/mol, insbesondere im Bereich von 1000 bis 40000 g/mol, bestimmt durch Gelpermeationschromatographie mit Hexafluorisopropanol als mobile Phase und Polymethylmethacrylat als Standard. Das gewichtsmittlere Molekulargewicht Mw Polyetheraminpolyol liegt häufig im Bereich von 1000 bis 300000 g/mol, insbesondere im Bereich von 2000 bis 200000 g/mol und speziell im Bereich von 5000 bis 150000 g/mol, bestimmt durch Gelpermeationschromatographie mit Hexafluorisopropanol als mobile Phase und Polymethylmethacrylat als Standard. Die Polydispersität, dh das Verhältnis Mw/Mn, des Polyetheraminpolyols liegt häufig im Bereich von 1,1 bis 25, insbesondere im Bereich von 1,5 bis 20.

Die dynamische Viskosität des verzweigten Polyetheraminpolyols liegt häufig im Bereich von 5 bis 200 Pas, bestimmt bei 23°C nach ASTM D7042, insbesondere im Bereich von 8 bis 150 Pas.

Der Begriff "verzweigt" beschreibt, dass das Polyetheraminpolyol keine lineare Struktur hat, aber eine signifikante Menge an Verzweigungspunkten innerhalb der Polymerhauptkette hat, was zu einer verzweigten Polymerkette führt. Solche Verzweigungspunkte können tri- oder tetrasubstituierte Kohlenstoffatome und/oder tertiäre Aminogruppen sein. Die Verzweigungspunkte sind insbesondere die tertiären Aminogruppen.

Die Hazen- Farbzahl des Polyetheraminpolyols liegt vorzugsweise im Bereich von 100 bis 600 (APHA), bestimmt nach DIN ISO 6271.

Das Polyetheraminpolyol ist häufig amorph und kann daher einen Glasübergang zeigen. Die Glasübergangstemperatur des Polyetheraminpolyols überschreitet vorzugsweise 50°C nicht, bevorzugter überschreitet sie 30°C nicht und überschreitet 10°C bevorzugter nicht, bestimmt durch Differentialscanningkalorimetrie (DSC), wie nachstehend beschrieben. Die Glasübergangstemperatur des Polyetheraminpolyols liegt vorzugsweise im Bereich von - 55 bis 30°C und stärker bevorzugt im Bereich von -55 bis 10°C, bestimmt durch DSC.

Verzweigte Polyetheraminpolyole und ihre Herstellung sind bekannt, beispielsweise aus DE 3206459 A1, EP 441198 A2, WO 2009/047269 A2, WO 2014/012812 A1, die verzweigte Polyetheraminpolyole auf Basis eines Polykondensationsprodukts mindestens eines Trialkanolamins offenbart.

In einer Ausführungsform der vorliegenden Erfindung ist das verzweigte Polyetheraminpolyol erhältlich durch Polykondensation mindestens eines Trialkanolamins oder durch Polykondensation einer Mischung mindestens eines Trialkanolamins mit einem aliphatischen oder cycloaliphatischen Polyol. Trialkanolamine werden hierfür vorzugsweise ausgewählt aus Tri-$C_2$-$C_8$-Alkanolaminen, wobei die Alkanolgruppen in Trialkanolamin unterschiedlich oder gleich sein können, wobei die Alkanolgruppen vorzugsweise gleich sind. Besonders bevorzugt sind die Trialkanolamine ausgewählt aus Tri-$C_2$-$C_4$-Alkanolaminen, wobei die Alkanolgruppen identisch sind.

Besonders bevorzugte Trialkanolamine sind Triethanolamin, Tri-n-propanolamin, Triisopropanolamin, Tri-n-butanolamin und Triisobutanolamin und Mischungen davon.

Geeignete aliphatische oder cycloaliphatische Polyole sind beispielsweise aliphatische Diole, aliphatische Polyole mit mehr als zwei Hydroxylgruppen, cycloaliphatische Diole und cycloaliphatische Polyole mit mehr als zwei Hydroxylgruppen. Bevorzugt sind aliphatische Diole und aliphatische Polyole, die mehr als zwei Hydroxylgruppen tragen. Beispiele für aliphatische Diole sind $C_2$-$C_{20}$ -Diole, wie Ethandiol, Propandiol, Butandiol, Pentandiol, Hexandiol, Heptandiol, Octandiol und deren Strukturisomere. Weitere Beispiele für aliphatische Diole sind Polyetherdiole der allgemeinen Formel HO-(($CH_2$)$_n$-O)$_m$-H, wobei n unabhängig voneinander 1 bis 10, vorzugsweise 2 bis 4 ist und m im Bereich von 2 bis 100 liegt.

Vorzugsweise sind die Polyetherdiole ausgewählt aus Polyethylenglycol, Polypropylenglycol, Polytetramethylenglykol und Copolymere davon. Beispiele für Polyole mit mehr als 2 Hydroxylgruppen sind Glycerin, Pentaerythrit, Trimethylolpropan, Sorbit und dergleichen. Die Polyole können auch alkoxyliert, insbesondere ethoxyliert oder propoxyliert sein, z.B. ethoxyliertes Glycerin, propoxyliertes Glycerin, ethyliertes Pentaerythrit, propoxyliertes Pentaerythrit, ethoxyliertes Trimethylolpropan, propoxyliertes Trimethylolpropan, ethoxyliertes Sorbit und propoxyliertes Sorbit. Üblicherweise wird der Alkoxylierungsgrad, d.h. das Zahlenmittel der Alkylenoxidanteile, 100 nicht überschreiten und liegt häufig im Bereich von 2 bis 50.

Vorzugsweise ist das Polyetheraminpolyol durch Polykondensation erhältlich, wobei die Monomere bis mindestens 50 Gew.-%, bevorzugt mindestens 70 Gew.-%, besonders bevorzugt mindestens 80 Gew.-%, bezogen auf die Gesamtmenge an Monomer, Verbindungen enthalten ausgewählt aus Trialkanolamine. Das Polyetheraminpolyol ist vorzugsweise erhältlich durch Polykondensation von Monomeren enthaltend 50 bis 100 Mol-% Verbindungen ausgewählt aus Trialkanolaminen und 0 bis 50 Mol-% Verbindungen ausgewählt aus aliphatischen oder cycloaliphatischen Polyolen, vorzugsweise enthaltend 70 bis 100 Mol-% Verbindungen ausgewählt aus Trialkanolaminen und 0 bis 30 Mol-% Verbindungen ausgewählt aus aliphatischen oder cycloaliphatischen Polyolen, besonders bevorzugt enthaltend 80 bis 100 Mol-% Verbindungen ausgewählt aus Trialkanolaminen und 0 bis 20 Mol-% Verbindungen ausgewählt aus aliphatischen oder cycloaliphatischen Polyolen, wobei "Mol-%" auf die Gesamtmenge an Monomeren bezogen sind.

In einer besonderen Ausführungsform ist das Polyetheraminpolyol erhältlich durch Polykondensation, wobei die Monomere nur aus Monomeren ausgewählt aus Trialkanolaminen bestehen. Das Trialkanolamin ist vorzugsweise ausgewählt aus Tri-$C_2$-$C_4$- Alkanolaminen. Bevorzugte Tri-$C_2$-$C_4$-Alkanolamine sind ausgewählt aus Triethanolamin, Triisopropanolamin und Tri-n-Propanolamin.

Die Mischung mindestens eines Trialkanolamins mit einem aliphatischen oder cycloaliphatischen Polyol ist vorzugsweise ausgewählt aus Mischungen mindestens eines Trialkanolamins, das ausgewählt ist aus der Gruppe bestehend aus Tri-$C_2$-$C_4$-Alkanolaminen und einem Aliphaten oder Cycloaliphaten $C_2$-$C_8$-Polyol.

Besonders bevorzugt sind Polyetheraminpolyole erhältlich durch Polykondensation von entweder Triethanolamin oder Triisopropanolamin oder einer Mischung aus Triethanolamin und Triisopropanolamin. In dieser Ausführungsform kann optional mindestens ein weiteres Polyol, insbesondere mindestens ein weiteres Diol vorhanden sein.

Die Polykondensation kann mit oder ohne Anwesenheit eines Katalysators durchgeführt werden. Geeignete Katalysatoren schließen Phosphorsäure ($H_3PO_4$), phosphorige Säure ($H_3PO_3$) oder Hypophosphorsäure ($H_3PO_2$) ein, sind aber nicht darauf beschränkt, die in Masse oder als wässrige Lösung aufgetragen werden können. Vorzugsweise wird der Katalysator in einer Menge von 0,001 bis 10 Mol-%, vorzugsweise von 0,005 bis 7 Mol-%, stärker bevorzugt von 0,01 bis 5 Mol-%, bezogen auf die Menge des Trialkanolamins, zugegeben.

Die Polykondensation kann unter Verwendung eines Lösungsmittels durchgeführt werden. Beispiele für Lösungsmittel, die zur Durchführung des Verfahrens verwendet werden können, sind aromatische und/oder (cyclo)aliphatische Kohlenwasserstoffe und ihre Mischungen, halogenierte Kohlenwasserstoffe, Ketone, Ester und Ether. Bevorzugt sind aromatische Kohlenwasserstoffe, (cyclo)aliphatische Kohlenwasserstoffe, Alkylester von Alkansäuren, Ketone, alkoxylierte Alkylester von Alkansäuren und Mischungen davon. Besonders bevorzugt sind monoalkylierte oder polyalkylierte Benzole und Naphthaline, Ketone, Alkylester von Alkansäuren und alkoxylierte Alkylester von Alkansäuren und Mischungen davon. Die Polykondensation wird vorzugsweise ohne Verwendung eines Lösungsmittels durchgeführt.

Die Polykondensation kann so durchgeführt werden, dass die Temperatur während der Polykondensation 250°C und vorzugsweise 230°C nicht übersteigt. Beispielsweise wird die Polykondensation bei Temperaturen im Bereich von 150 bis 230°C, vorzugsweise 180 bis 215°C durchgeführt. Noch bevorzugter übersteigt die Temperatur während der Polykondensation 215°C nicht und insbesondere 210°C nicht.

Die Polykondensation kann bei einem Druck im Bereich von 0,02 bis 20 bar durchgeführt werden. Vorzugsweise wird die Polykondensation bei Normaldruck durchgeführt. An die Polykondensation schließt sich bevorzugt eine Entfernung oder Abblasung von Restmonomeren an, beispielsweise durch Abdestillieren bei Normaldruck oder bei vermindertem Druck, beispielsweise im Bereich von 0,1 bis 0,5 bar.

Wasser oder andere flüchtige Produkte, die während der Polykondensation freigesetzt werden, können zur Beschleunigung der Reaktion aus dem Reaktionsgemisch entfernt werden. Vorzugsweise werden Wasser oder andere flüchtige Produkte, die bei der Polykondensation freigesetzt werden, entfernt, beispielsweise durch Destillation und gegebenenfalls unter vermindertem Druck. Die Entfernung von Wasser oder anderen niedermolekularen Reaktionsnebenprodukten kann auch dadurch unterstützt werden, dass durch das Reaktionsgemisch ein unter den Reaktionsbedingungen weitgehend inerter Gasstrom (Strippen), geleitet wird wie z.B. Stickstoff oder Edelgas, wie zum Beispiel Helium, Neon oder Argon.

Die hierin beschriebenen verzweigten Polyetheraminpolyole sind typischerweise bei Raumtemperatur über einen längeren Zeitraum, wie zum Beispiel mindestens 10 Wochen, stabil. Insbesondere sind die Polyetheraminpolyole stabil, ohne Trübungen, Ausfällungen und/oder deutliche Viskositätserhöhungen aufzuweisen.

Die Polykondensation kann auf verschiedene Weise beendet werden. Beispielsweise kann die Temperatur auf einen Bereich abgesenkt werden, in dem die Reaktion zum Erliegen kommt und das Polykondensationsprodukt lagerstabil ist. Dies ist im Allgemeinen unterhalb von 100°C, bevorzugt unterhalb von 60°C, besonders bevorzugt unterhalb von 40°C und ganz besonders bevorzugt bei Raumtemperatur der Fall. Eine weitere Möglichkeit besteht darin, den Katalysator durch Zugabe einer basischen Komponente, beispielsweise einer Lewis-Base oder einer organischen oder anorganischen Base, zu desaktivieren.

Die Polykondensation kann in Rührkesselreaktoren oder Rührkesselkaskaden durchgeführt werden. Das Verfahren kann diskontinuierlich, halbkontinuierlich oder kontinuierlich durchgeführt werden. Polykondensationsprodukte von Trialkanolaminen und Polycokondensationsprodukte von Trialkanolaminen, wie sie hierin beschrieben sind, werden vorzugsweise als Polyetheraminpolyol ohne chemische Modifizierung oder Derivatisierung verwendet.

Anstelle eines nicht derivatisierten Polykondensationsprodukts kann auch ein Polykondensationsprodukt von Trialkanolaminen oder ein Derivat eines Polycokondensationsprodukts eines Trialkanolamins verwendet werden.

Derivate solcher Polykondensations- und Polycokondensationsprodukte von Trialkanolaminen umfassen Produkte, die durch Alkoxylierung der Hydroxylendgruppen der nicht derivatisierten Polykondensations- und Polycokondensationsprodukte erhalten werden. Ebenso ist es möglich, die nicht derivatisierten Polykondensations- oder Polycokondensationsprodukte durch hydrophobe Gruppen oder hydrophile Gruppen zu modifizieren. Hydrophobierung bzw. Hydrophilisierung kann erreicht werden, indem ein Teil der Hydroxylendgruppen mit ausgewählten Reaktanten umgesetzt wird. Die Aminogruppen der Polykondensations- und Polycokondensationsprodukte können auch durch Verwendung von Alkylierungsmitteln quaternisiert werden, um dauerhaft kationisch modifizierte Polymere zu erhalten. Derivate solcher Polykondensations- und Polycokondensationsprodukte von Trialkanolaminen sind beispielsweise beschrieben in US 2011/0168045 AA, WO 2009/060060 A1 und WO 2009/112379 A1, auf die verwiesen wird. Bevorzugte Derivatisierungsprodukte im Sinne der Erfindung sind alkoxylierte Polykondensations- und Polycokondensationsprodukte.

Das Polyetheraminpolyol löst sich üblicherweise leicht in einer Vielzahl von Lösungsmitteln, wie Wasser, Alkoholen, wie Methanol, Ethanol, n-Butanol, Alkohol/Wasser-Mischungen, Aceton, 2-Butanon, Ethylacetat, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Die wässrige Bindemittelzusammensetzung enthält üblicherweise das verzweigte Polyetheraminpolyol in einer Menge von 0,01 bis 10 Gew.-%, insbesondere von 0,05 bis 7,5 Gew.-%, insbesondere von 0,1 bis 5 Gew.-%, bezogen auf die Trockenmasse des Gewichts des carboxylierten Polymers des wässrigen Polymerlatex.

*Wässriger Polymerlatex eines filmbildenden carboxylierten Polymers*

Die wässrige Bindemittelzusammensetzung enthält auch einen wässrigen Polymerlatex eines filmbildenden carboxylierten Polymers.

Der Begriff "filmbildend" im Zusammenhang mit dem Polymerlatex bedeutet die Fähigkeit des carboxylierten Polymers des Polymerlatex, beim Trocknen unter Anwendungsbedingungen einen Film auf Oberflächen zu bilden. Das Polymer hat häufig eine Filmbildungstemperatur von höchstens 50°C, insbesondere höchstens 30°C. Die Filmbildetemperatur kann beispielsweise durch Zusatz von Filmbildehilfsmitteln wie Weichmachern und/oder Lösungsmitteln gesenkt werden.

Die Fähigkeit des Polymers des Latex, unter Anwendungsbedingungen filmbildend zu sein, hängt von seiner Glasübergangstemperatur ab. Im Allgemeinen weist das carboxylierte Polymer der wässrigen Polymerdispersionen eine Glasübergangstemperatur $T_g$ im Bereich von -50 bis +60°C, insbesondere von -40 bis +50°C, insbesondere im Bereich von -30 bis +30 auf °C. Die Glasübergangstemperatur kann nach der DSC-Methode (Differential Scanning Calorimetry, 20 K/min, Mittelpunktmessung) gemäß DIN 53765:1994-03 oder ISO 1 1357-2, vorzugsweise mit Probenvorbereitung nach DIN EN ISO 16805:2005 bestimmt werden. Im Falle eines mehrphasigen Polymers, das 2 oder mehr Polymere bzw. Polymerphasen mit unterschiedlichen Glasübergangstemperaturen enthält, können die Glasübergangstemperaturen der einzelnen Polymerphasen außerhalb der hier angegebenen Bereiche liegen. Die gewichtsmittlere Glasübergangstemperatur $T_g$ (av) wird jedoch durch die Gleichung berechnet:

$$T_g(av) = (T_g(1)*w_1 + T_g(2)*w_2 + \ldots + T_g(n)*w_n).$$

Sie liegt häufig im Bereich von -50 bis +60°C, insbesondere von -40 bis +50°C, insbesondere im Bereich von -30 bis +30°C. In der Gleichung geben $T_g(1)$, $T_g(2)$ bis $T_g(n)$ die einzelnen Glasübergangstemperaturen in K der einzelnen Polymere 1, 2 bis n an, während $w_1$, $w_2$ bis $w_n$ den Anteil in Gewichtsprozent der einzelnen Polymere 1, 2 bis n angeben.

Beispielsweise ein wässriger Latex eines mehrstufigen Polymers enthaltend 20 Gew.-% einer ersten Polymerphase 1 mit einer $T_g$ von -10°C und 80 Gew.-% einer zweiten Polymerphase 2 mit einer $T_g$ von +40°C haben eine gewichtsmittlere $T_g$ (av) = 34°C. Wenn das Polymer der wässrigen Polymerdispersionen Polymere mit unterschiedlichen $T_g$ enthält, kann die Differenz zwischen der niedrigsten $T_g$ und der höchsten $T_g$ so hoch wie beispielsweise 100°C sein, beispielsweise von 10 bis 100°C. Vorzugsweise hat das in der wässrigen Polymerdispersion dispergierte Polymer nur eine $T_g$ oder, falls es Polymere mit unterschiedlichen $T_g$ enthält, die maximale Differenz der niedrigsten $T_g$ und der höchsten $T_g$ 50K, insbesondere 20K nicht überschreitend.

Nach Fox (T.G. Fox, Bull. Am. Phys. Soc. 1956, Bd. 1, Seite 123) und nach Ullmann's Encyclopädie der technischen Chemie (Bd. 19, Seite 18, 4. Auflage, Verlag Chemie, Weinheim, 1980) ist eine gute Annäherung der Glasübergangstemperatur von nicht mehr als leicht vernetzten Copolymeren:

$$1/T_g \text{ (Fox)} = x_1/T_{g1} + x2/T_{g2} + \ldots\ldots + X_n/T_{gn},$$

wobei $x_1$, $x_2$,... x, die Massenanteile der Monomere 1, 2, ..., n und $T_{g1}$, $T_{g2}$, .... , $T_{gn}$. Die Glasübergangstemperaturen sind in Grad Kelvin der Polymere synthetisiert aus jeweils nur einem der Monomer 1, 2, ..., n. Die $T_g$-Werte für die Homopolymere der meisten Monomere sind bekannt und beispielsweise in Ullmann's Encyclopedia of Industrial Chemistry, 5. Aufl. A21, Seite 169, Verlag Chemie, Weinheim, 1992; weitere Quellen für Glasübergangstemperaturen von Homopolymeren sind beispielsweise J. Brandrup, EH Immergut, Polymer Handbook, 1. Aufl., J. Wiley, New York 1966, 2. Aufl. J. Wiley, New York 1975, und 3. Aufl. J. Wiley, New York 1989.

Im Falle eines mehrstufigen Polymers, das zwei Polymere oder Polymerphasen mit unterschiedlichen Glasübergangstemperaturen enthält, liegt die Glasübergangstemperatur der einen Phase üblicherweise über 40°C, vorzugsweise mindestens 60°C, bestimmt mittels DSC wie beschrieben hierin. Die Glasübergangstemperatur der anderen Phase liegt laut Fox üblicherweise unter 40°C, vorzugsweise höchstens 30°C, bestimmt mittels DSC wie hierin beschrieben.

Im Falle eines mehrstufigen Polymers, das 2 Polymere oder Polymerphasen mit unterschiedlichen Glasübergangstemperaturen enthält, enthält das Polymer vorzugsweise 95 bis 40 Gew.-%, bezogen auf das Gesamtgewicht des Polymers, des Polymers mit der niedrigeren Glasübergangstemperatur, die gewöhnlich unter 40°C liegt, und 5 bis 60 Gew.-%, bezogen auf das Gesamtgewicht des Polymers, des Polymers mit der höheren Glasübergangstemperatur, die gewöhnlich über 40°C liegt.

Der Begriff "carboxyliertes Polymer" bedeutet, dass das Polymer des Latex Carboxylgruppen trägt, die an die Polymerhauptkette gebunden sind. Üblicherweise sind die Carboxylgruppen in das Polymer eingebaut mittels polymerisierter ethylenisch ungesättigter Monomere mit einer oder mehreren Carboxylgruppen. Solche Monomere werden typischerweise aus monoethylenisch ungesättigten Monocarbonsäuren mit 3 bis 6 Kohlenstoffatomen und monoethylenisch ungesättigten Dicarbonsäuren mit 4 bis 6 Kohlenstoffatomen ausgewählt.

Beispiele für solche Monomere sind Acrylsäure, Methacrylsäure, Crotonsäure, 2-Ethylpropensäure, 2- Propylpropensäure, Itaconsäure und Fumarsäure.

Das carboxylierte Polymer des filmbildenden Polymerlatex ist üblicherweise erhältlich durch radikalische Copolymerisation eines Monomers M, das den carboxylierten Monomerlatex bildet. Diese Monomere M, die auch als Monomerzusammensetzung M bezeichnet werden, enthalten mindestens ein monoethylenisch ungesättigtes Monomer mit mindestens einer Carboxylgruppe, die beispielsweise ausgewählt ist aus monoethylenisch ungesättigten Monocarbonsäuren mit 3 bis 6 Kohlenstoffatomen und monoethylenisch ungesättigten Dicarbonsäuren mit 4 bis 6 Kohlenstoffatomen, und mindestens einem weiteren neutralen ethylenisch ungesättigten Monomer, das im Wesentlichen wasserunlöslich ist, d.h. das eine Löslichkeit in entionisiertem Wasser von höchstens 50 g/l bei 20°C aufweist. Üblicherweise umfasst die Monomerzusammensetzung 0,05 bis 10 Gew.-%, bezogen auf das Gesamtgewicht der in der Monomerzusammensetzung enthaltenen Monomere.

Insbesondere besteht die Monomerzusammensetzung M im Wesentlichen aus

a) ein oder mehrere ethylenisch ungesättigte Monomere M1, die eine Löslichkeit in deionisiertem Wasser von höchstens 50 g/l bei 20°C aufweisen und die insbesondere ausgewählte $C_1$-$C_{20}$-Alkylester von monoethylenisch ungesättigten Monocarbonsäuren sind mit 3 bis 6 C-Atomen, Di-$C_1$-$C_{20}$-Alkylester von monoethylenisch ungesättigten Dicarbonsäuren mit 4 bis 6 C-Atomen, $C_5$-$C_{20}$-Cycloalkylester von monoethylenisch ungesättigten Monocarbonsäuren mit 3 bis 6 C- Atomen, Vinylester von $C_1$-$C_{20}$-Alkansäuren, vinylaromatischen Monomeren, $C_2$-$C_6$-Monoolefinen und Butadien;

b) ein oder mehrere monoethylenisch ungesättigte Monomere M2, die ausgewählt sind aus monoethylenisch ungesättigten Monocarbonsäuren mit 3 bis 6 C-Atomen und monoethylenisch ungesättigten Dicarbonsäuren mit 4 bis 6 C-Atomen;

c) optional ein oder mehrere nichtionische Monomere M3, die verschieden sind von Monomere M1.

Der Begriff "im Wesentlichen bestehend aus" bedeutet in diesem Zusammenhang, dass die Gesamtmenge der Monomere M1, M2 und M3 mindestens 95 Gew.-%, insbesondere mindestens 99 Gew.-% oder 100 Gew.-% der ausmachen Gesamtmenge an Monomeren der Monomerzusammensetzung.

Beispiele für Monomere M1 beinhalten, sind aber nicht beschränkt auf

-   $C_1$-$C_{20}$-Alkylester von monoethylenisch ungesättigten Monocarbonsäuren mit 3 bis 6 C-Atomen, wie z.B. $C_1$-$C_{20}$-Alkylester der Acrylsäure, wie Methylacrylat, Ethylacrylat, n-Propylacrylat, Isopropylacrylat, n-Butylacrylat, 2-Butylacrylat, Isobutylacrylat, n- Pentylacrylat, n-Hexylacrylat, n-Octylacrylat, 2-Ethylhexylacrylat, n-Decylacrylat, 2- Propylheptylacrylat, Laurylacrylat, $C_{12}/C_{14}$-Alkylacrylat und Stearylacrylat, $C_1$-$C_{20}$- Alkylester von Methacryl Säure, wie Methylmethacrylat, Ethylmethacrylat, n- Propylmethacrylat, Isopropylmethacrylat, n-Butylmethacrylat, 2-Butylmethacrylat, Isobutylmethacrylat, tert.-Butylmethacrylat, n-Pentylmethacrylat, n-Hexylmethacrylat, n-Octylmethacrylat, 2-Ethylhexylmethacrylat, n-Decylmethacrylat, 2-Propylheptylmethacrylat, Laurylmethacrylat, $C_{12}/C_{14}$-Alkylmethacrylat und Stearylmethacrylat;

- Di-$C_1$-$C_{20}$-Alkylester von monoethylenisch ungesättigten Dicarbonsäuren mit 4 bis 6 C-Atomen, wie Di-$C_1$-$C_{20}$-Alkylester der Itaconsäure, Di-$C_1$-$C_{20}$-Alkyl Ester der Citraconsäure, Di-$C_1$-$C_{20}$-Alkylester der Maleinsäure und Di-$C_1$-$C_{20}$-Alkylester der Fumarsäure;

- $C_5$-$C_{20}$-Cycloalkylester von monoethylenisch ungesättigten Monocarbonsäuren mit 3 bis 6 C-Atomen, $C_5$-$C_{20}$-Cycloalkylester der Acrylsäure und $C_5$-$C_{20}$-Cycloalkylester der Methacrylsäure;

- Vinylester von $C_1$-$C_{20}$-Alkansäuren;

- vinylaromatische Monomere wie monovinylsubstituierte aromatische Kohlenwasserstoffe wie Styrol, 2-Methylstyrol, 4-Methylstyrol, 2-n-Butylstyrol, 4-n-Butylstyrol, 4-n-Decylstyrol und alpha-Methylstyrol;

- $C_2$-$C_6$-Monoolefine und Butadien.

In einer bevorzugten Ausführungsform handelt es sich bei den Monomeren M1 um eine Mischung aus

- mindestens ein Monomer M1a, ausgewählt aus $C_1$-$C_{20}$ -Alkylestern der Acrylsäure und $C_5$-$C_{20}$-Alkylestern der Methacrylsäure; und mindestens ein Monomer M1b, ausgewählt aus vinylaromatischen Monomeren und $C_1$-$C_4$-Alkylestern der Methacrylsäure

und Mischungen davon.

Geeignete Monomere M1a sind:

- $C_1$-$C_{20}$-Alkylester der Acrylsäure, wie Methylacrylat, Ethylacrylat, n-Propylacrylat, Isopropylacrylat, n-Butylacrylat, 2-Butylacrylat, Isobutylacrylat, n-Pentylacrylat, n-Hexylacrylat, n-Octylacrylat, 2-Ethylhexylacrylat, n-Decylacrylat, 2-Propylheptylacrylat, Laurylacrylat, $C_{12}/C_{14}$-Alkylacrylat und Stearylacrylat; $C_5$-$C_{20}$-Alkylester der Methacrylsäure, wie n-Pentylmethacrylat, n-Hexylmethacrylat, n-Octylmethacrylat, 2-Ethylhexylmethacrylat, n-Decylmethacrylat, 2-Propylheptylmethacrylat, Laurylmethacrylat, $C_{12}/C_{14}$-Alkylmethacrylat und Stearylmethacrylat;

und Mischungen davon.

Geeignete Monomere M1b sind:

- $C_1$-$C_4$-Alkylester der Methacrylsäure, wie Methylmethacrylat, Ethylmethacrylat, n-Propylmethacrylat, Isopropylmethacrylat, n-Butylmethacrylat, 2-Butylmethacrylat, Isobutylmethacrylat und tert.-Butylmethacrylat, besonders bevorzugt Methylmethacrylat;

- Vinylaromatische Monomere, insbesondere Monovinyl -substituierte Aromaten Kohlenwasserstoffe wie Styrol, 2-Methylstyrol, 4-Methylstyrol, 2-n-Butylstyrol, 4-n-Butylstyrol, 4-n-Decylstyrol und alpha-Methylstyrol, besonders bevorzugt Styrol;

und Mischungen davon.

Vorzugsweise sind die Monomere M1a ausgewählt aus $C_2$-$C_{10}$-Alkylestern der Acrylsäure, insbesondere aus Ethylacrylat, n-Butylacrylat, n-Hexylacrylat, n-Octylacrylat, 2-Ethylhexylacrylat und 2 -Propylheptylacrylat.

Vorzugsweise sind die Monomere M1b ausgewählt aus vinylaromatischen Monomeren und $C_1$-$C_4$-Alkylestern der Methacrylsäure und deren Mischungen, insbesondere aus Styrol, Methylmethacrylat.

In den Mischungen der Monomere M1a und M1b kann die relative Menge an M1a und M1b insbesondere von 10:1 bis 1:10, insbesondere von 5:1 bis 1:5, insbesondere von 3:1 bis 1:3 variieren.

Beispiele für Monomere M2 umfassen, sind aber nicht beschränkt auf Acrylsäure, Methacrylsäure, Crotonsäure, 2-Ethylpropensäure, 2-Propylpropensäure, Itaconsäure und Fumarsäure. Bevorzugt sind Monocarbonsäuren. Besonders bevorzugt sind Acrylsäure, Methacrylsäure und Mischungen davon.

Besonders bevorzugt ist das Monomer M2 ausgewählt aus Methacrylsäure oder einer Mischung aus Acrylsäure und Methacrylsäure.

Beispiele für Monomere M3 beinhalten, sind aber nicht beschränkt auf

- primäre Amide von monoethylenisch ungesättigten Monocarbonsäuren mit 3 bis 8 C-Atomen (Monomere M3.1), wie Acrylamid und Methacrylamid;

- N-$C_1$-$C_{10}$-Alkylamide von monoethylenisch ungesättigten Monocarbonsäuren mit 3 bis 6 C-Atomen (Monomere M3.2), insbesondere N-$C_1$-$C_{10}$-Alkylamide der Acrylsäure oder Methacrylsäure, wie N-Methylacrylamid, N- Ethylacrylamid, N-Propylacrylamid, N-Isopropylacrylamid, N-Butylacrylamid, N-Methylmethacrylamid, N-Ethylmethacrylamid, N-Propylmethacrylamid, N-Isopropylmethacrylamid und N-Butylmethacrylamid;

- monoethylenisch ungesättigte Monomere mit Harnstoff oder Keto Gruppen (Monomere M3.3), wie 2-(2-Oxo-imidazolidin-1-yl)ethyl(meth)acrylat, 2-Ureido(meth)acrylat, N-[2-(2-Oxooxazolidin-3-yl)ethyl]methacrylat, Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM) und Diacetonmethacrylamid;

- Hydroxyalkylester von monoethylenisch ungesättigten $C_3$-$C_6$-Monocarbonsäuren (Monomere M3.4), insbesondere Hydroxyalkylester der Acrylsäure und Hydroxyalkylester der Methacrylsäure, im Folgenden auch Hydroxyalkyl genannt. (Meth)acrylate, insbesondere Hydroxy-$C_2$-$C_4$-Alkylester der Acrylsäure und Hydroxy-$C_2$-$C_4$-Alkylester der Methacrylsäure, wie 2-Hydroxyethylacrylat, 3-Hydroxypropylacrylat, 4-Hydroxybutylacrylat, 2-Hydroxyethylmethacrylat, 3-Hydroxypropylmethacrylat, 4-Hydroxybutylmethacrylat usw.;

- Monoethylenisch ungesättigte Monomere, die mindestens eine Tri-$C_1$-$C_4$-Alkoxysilangruppe tragen (Monomere M3.5), wie Vinyltrimethoxysilan, Vinyltriethoxysilan, Methacryloxyethyltrimethoxysilan, Methacryloxyethyltriethoxysilan und Mischungen davon. Die Menge der genannten Monomere M3.5 wird häufig im Bereich von 0,01 bis 1pphm liegen.

Die Monomere M3 können in geringem Umfang auch mehrfach ethylenisch ungesättigte Monomere (Monomere M3.6), d.h. Monomere mit mindestens zwei nicht konjugierten ethylenisch ungesättigten Doppelbindungen enthalten. Die Mengen der genannten Monomere M3.6 werden im Allgemeinen 1pphm nicht überschreiten. Geeignete Monomere M3.6 sind beispielsweise:

- Diester von monoethylenisch ungesättigten $C_3$-$C_6$-Monocarbonsäuren mit gesättigten aliphatischen oder cycloaliphatischen Diolen, insbesondere Diester der Acrylsäure oder Methacrylsäure, wie die Diacrylate und die Dimethacrylate von Ethylenglykol (1,2-Ethandiol), Propylen Glykol (1,2-Propandiol), 1,2-Butandiol, 1,3-Butandiol, 1,4-Butandiol, Neopentylglykol (2,2-Dimethyl-1,3-propandiol) oder 1,2-Cyclohexandiol;

- Monoester von monoethylenisch ungesättigten $C_3$-$C_6$-Monocarbonsäuren mit monoethylenisch ungesättigten aliphatischen oder cycloaliphatischen Monohydroxyverbindungen, wie die Acrylate und die Methacrylate von Vinylalkohol (Ethenol), Allylalkohol (2-Propen-1-ol), 2-Cyclohexen- 1-ol oder Norbornenol und

- divinylaromatische Verbindungen, wie 1,3-Divinylbenzol, 1,4-Divinylbenzol und Mischungen davon.

In einer besonderen Ausführungsform der Erfindung enthalten die Monomere M keine Monomere M3.6 oder nicht mehr als 0,1 pphm der Monomere M3.6.

Unter den Monomeren M3 sind Hydroxyalkylester der Acrylsäure und Hydroxyalkylester von Acrylsäure bevorzugt Methacrylsäure, insbesondere Hydroxy-$C_2$-$C_4$-Alkylester der Acrylsäure und Hydroxy-$C_2$-$C_4$-Alkylester der Methacrylsäure, Acrylamid, Methacrylamid und Mischungen davon.

Das carboxylierte Polymer ist bevorzugt erhältlich durch Polymerisation einer Monomerzusammensetzung M, wobei die Monomerzusammensetzung M im Wesentlichen besteht aus

a) 70 bis 99,95 Gew.-%, insbesondere 80 bis 99,9 Gew.-%, speziell 90 bis 99,8 Gew.-%, bezogen auf das Gesamtgewicht der Monomere der Monomerzusammensetzung M, eines oder mehrerer monoethylenisch ungesättigte Monomere M1 wie hierin definiert,

b) 0,05 bis 10 Gew.-%, insbesondere 0,1 bis 8 Gew.-%, insbesondere 0,2 bis 5 Gew.-%, bezogen auf das Gesamtgewicht der Monomere der Monomerzusammensetzung M, einer oder mehrerer monoethylenisch ungesättigter Verbindungen Monomere M2 wie hierin definiert,

c) 0 bis 20 Gew.-%, insbesondere 0 bis 10 Gew.-%, insbesondere 0 bis 5 Gew.-%, bezogen auf das Gesamtgewicht der Monomere der Monomerzusammensetzung M, von einem oder mehreren nicht-ionische Monomere M3 wie hierin definiert, die von den Monomeren M1 verschieden sind.

Das carboxylierte Polymer ist insbesondere erhältlich durch eine Polymerisation einer Monomerzusammensetzung M, wobei die Monomerzusammensetzung M besteht aus

a) ein oder mehrere ethylenisch ungesättigte Monomere M1, die ausgewählt sind aus der Gruppe bestehend aus mindestens ein Monomer M1a, ausgewählt aus $C_1$-$C_{20}$-Alkylestern der Acrylsäure und $C_5$-$C_{20}$-Alkylestern der Methacrylsäure; und mindestens ein Monomer M1b, ausgewählt aus vinylaromatischen Monomeren und $C_1$-$C_4$-Alkylestern der Methacrylsäure und Mischungen davon,

b) ein oder mehrere monoethylenisch ungesättigte Monomere M2, die ausgewählt sind aus der Gruppe bestehend aus monoethylenisch ungesättigten Monocarbonsäuren mit 3 bis 6 C- Atomen und monoethylenisch ungesättigten Dicarbonsäuren mit 4 bis 6 C-Atomen;

c) optional ein oder mehrere nichtionische Monomere M3, die verschieden sind von Monomere M1.

In einer bevorzugten Ausführungsform ist das filmbildende carboxylierte Polymer erhältlich durch eine Polymerisation einer Monomerzusammensetzung M, wobei die Monomerzusammensetzung M im Wesentlichen besteht aus

a) 70 bis 99,95 Gew.-%, insbesondere 80 bis 99,9 Gew.-%, insbesondere 90 bis 99,8 Gew.-%, bezogen auf das Gesamtgewicht der Monomere der Monomerzusammensetzung M, eines oder mehrerer monoethylenisch ungesättigter Monomere M1, die ausgewählt sind aus der Gruppe bestehend aus

- mindestens ein Monomer M1a, ausgewählt aus $C_1$-$C_{20}$ -Alkylestern der Acrylsäure und $C_5$-$C_{20}$-Alkylestern der Methacrylsäure; und

- mindestens ein Monomer M1b, ausgewählt aus vinylaromatischen Monomeren und $C_1$-$C_4$-Alkylestern der Methacrylsäure und Mischungen davon,

b) 0,05 bis 10 Gew.-%, insbesondere 0,1 bis 8 Gew.-%, insbesondere 0,2 bis 5 Gew.-%, bezogen auf das Gesamtgewicht der Monomeren der Monomerzusammensetzung M, eines oder mehrerer monoethylenisch ungesättigte Monomere M2 wie hierin definiert,

c) 0 bis 20 Gew.-%, insbesondere 0 bis 10 Gew.-%, insbesondere 0 bis 5 Gew.-%, bezogen auf das Gesamtgewicht der Monomere der Monomerzusammensetzung M, von einem oder mehreren nicht-ionische Monomere M3 wie hierin definiert, die von den Monomeren M1 verschieden sind.

In dem wässrigen carboxylierten Polymerlatex liegen die dispergierten Polymere in Form von Polymerteilchen vor. Die Polymerpartikel haben typischerweise einen mittleren Durchmesser im Bereich von 50 bis 500nm, insbesondere im Bereich von 60 bis 400nm und insbesondere im Bereich von 80 bis 300nm. Der durchschnittliche Teilchendurchmesser, wie hierin Bezug genommen wird, bezieht sich auf den Z-durchschnittlichen Teilchendurchmesser, wie bestimmt mittels Photonenkorrelationsspektroskopie (PCS), auch bekannt als quasielastische Lichtstreuung (QELS) oder dynamische Lichtstreuung (DLS). Das Messverfahren ist in der Norm ISO 13321:1996 beschrieben. Die Bestimmung kann mit einem HPPS (High Performance Particle Sizer) durchgeführt werden. Dazu wird eine Probe des wässrigen Polymerlatex verdünnt und die Verdünnung analysiert. Im Kontext von DLS, die wässrige Verdünnung kann je nach Teilchengröße eine Polymerkonzentration im Bereich von 0,001 bis 0,5 Gew.-% aufweisen. Für die meisten Zwecke beträgt eine geeignete Konzentration 0,01 Gew.-%. Es können jedoch höhere oder niedrigere Konzentrationen verwendet werden, um ein optimales Signal/Rausch-Verhältnis zu erreichen. Die Verdünnung kann durch Zugabe des Polymerlatex zu Wasser oder einer wässrigen Lösung eines Tensids erreicht werden, um eine Ausflockung zu vermeiden. Üblicherweise erfolgt die Verdünnung durch Verwendung einer 0,1 Gew.-%-igen wässrigen Lösung eines nichtionischen Emulgators, z. B. eines ethoxylierten $C_{16}$/$C_{18}$-Alkanols (Ethoxylierungsgrad 18) als Verdünnungsmittel. Messkonfiguration: HPPS von Malvern, automatisiert, mit Continuous-Flow-Küvette und Gilson Autosampler. Parameter: Messtemperatur 20,0°C; Messzeit 120 Sekunden (6 Zyklen à 20 s); Streuwinkel 173°; abhängig von der Partikelgröße. Wellenlängenlaser 633 nm (HeNe); Brechungsindex des Mediums 1,332 (wässrig); Viskosität 0,9546 mPa·s. Die Messung ergibt einen Mittelwert der Kumulantenanalyse zweiter Ordnung (Mean of Fits), d.h. Z-Mittelwert. Der "Mittelwert der Anpassungen" ist ein durchschnittlicher, intensitätsgewichteter hydrodynamischer Partikeldurchmesser in nm.

Vorzugsweise weisen die Polymere in der Polymerdispersion eine enge Teilchengrößenverteilung auf. Die Partikelgrößenverteilung wird durch den Polydispersitätsindex charakterisiert, der eine dimensionslose Zahl ist, die aus einer einfachen 2-Parameter-Anpassung an die Korrelationsdaten der Kumulantenanalyse berechnet wird. Die Berechnung erfolgt normalerweise wie in ISO 13321:1996 beschrieben. Häufig wird der PDI kleiner als 0,2 sein.

Der Polymerlatex des carboxylierten Polymers ist üblicherweise erhältlich durch eine wässrige radikalische Emulsionspolymerisation, insbesondere durch radikalische wässrige Emulsionspolymerisation, der den carboxylierten Monomerlatex bildenden Monomeren M in Analogie zu bekannten Verfahren der radikalischen Emulsionspolymerisation Technologie. Die für die Durchführung der radikalischen Emulsionspolymerisation der Monomeren M erforderlichen Bedingungen sind dem Fachmann hinlänglich geläufig, beispielsweise aus dem eingangs zitierten Stand der Technik und aus "Emulsionspolymerisation" [Emulsion Polymerisation] in Encyclopedia of Polymer Science and Engineering, vol. 8, Seiten 659 ff. (1987); DC Blackley, in High Polymer Latices, vol. 1, Seite 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsionspolymerisation, Interscience Publishers, New York (1965); DE-A 40 03 422 und Dispersionen synthetischer Hochpolymerer, F. Holscher, Springer-Verlag, Berlin (1969)].

Die radikalisch initiierte wässrige Emulsionspolymerisation wird durch einen radikalischen Polymerisationsinitiator (Radikalstarter) ausgelöst. Dies können grundsätzlich Peroxide oder Azoverbindungen sein. Natürlich sind auch Redox-Initiatorsysteme brauchbar. Als Peroxide können prinzipiell anorganische Peroxide, wie Wasserstoffperoxid oder Peroxodisulfate, wie die Mono- oder Dialkalimetall- oder Ammoniumsalze der Peroxodischwefelsäure, beispielsweise die Mono- und Dinatrium-, Kalium- oder Ammoniumsalze, oder organische Peroxide wie Alkylhydroperoxide, z.B. tert.-Butylhydroperoxid, p-Menthylhydroperoxid oder Cumylhydroperoxid, sowie Dialkyl- oder Diarylperoxide, wie Di-tert.-Butyl- oder Dicumylperoxid eingesetzt werden. Als Azoverbindungen werden im Wesentlichen 2,2'- Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) verwendet. Als Oxidationsmittel für Redox-Initiatorsysteme kommen im Wesentlichen die oben genannten Peroxide in Betracht, sowie Dihydroxymaleinsäure, Benzoin und/oder Ascorbinsäure und reduzierende Saccharide, wie Sorbose, Glucose, Fructose und/oder Dihydroxyaceton.

Bevorzugte Radikalstarter sind anorganische Peroxide, insbesondere Peroxodisulfate, und Redox-Initiatorsysteme. Im Allgemeinen beträgt die Menge des eingesetzten Radikalstarters, bezogen auf die Gesamtmenge an Monomeren M, 0,01 bis 5 pphm, bevorzugt 0,1 bis 3 pphm.

Die im Verfahren für die Emulsionspolymerisation M benötigte Menge an Radikalstarter kann vollständig im Polymerisationsgefäß vorgelegt werden. Es ist jedoch auch möglich, keinen oder nur einen Teil des Radikalstarters zuzugeben, beispielsweise nicht mehr als 30 Gew.-%, insbesondere nicht mehr als 20 Gew.-%, bezogen auf die Gesamtmenge des Radikals erforderlichen Initiator in das wässrige Polymerisationsmedium zu geben und dann unter Polymerisationsbedingungen während der radikalischen Emulsionspolymerisation der Monomeren M die gesamte Menge oder eine gegebenenfalls verbleibende Restmenge je nach Verbrauch diskontinuierlich in einer oder mehreren Portionen oder kontinuierlich mit zuzugeben bei konstanter oder variierender Durchflussrate.

Vorzugsweise wird die radikalische Emulsionspolymerisation der den carboxylierten Polymerlatex bildenden Monomeren nach einem sogenannten Zulaufverfahren durchgeführt, was bedeutet, dass mindestens 90%, insbesondere mindestens 95% oder die Gesamtmenge der Monomere polymerisiert werden und der Polymerisationsreaktion unter Polymerisationsbedingungen während eines Dosierzeitraums P zudosiert werden. Die Dauer des Zeitraums P kann von der Produktionsanlage abhängen und von z.B. 20 Minuten bis 12 h variieren. Häufig wird die Dauer des Zeitraums P im Bereich von 0,5 h bis 5 h, insbesondere von 1 h bis 4 h liegen.

Unter dem Begriff "Polymerisationsbedingungen" sind im Allgemeinen solche Temperaturen und Drücke zu verstehen, unter denen die radikalisch initiierte wässrige Emulsionspolymerisation mit ausreichender Polymerisationsgeschwindigkeit abläuft. Sie hängen insbesondere vom verwendeten Radikalstarter ab. Vorteilhafterweise werden Art und Menge des Radikalstarters, Polymerisationstemperatur und Polymerisationsdruck so gewählt, dass stets eine ausreichende Menge an initiierenden Radikalen vorhanden ist, um die Polymerisationsreaktion einzuleiten oder aufrechtzuerhalten. Es kann zweckmäßig sein, die Polymerisationsbedingungen einzustellen und mindestens einen Teil des Radikalstarters im Polymerisationsgefäß vorzulegen, bevor mit der Dosierung der Monomere M begonnen wird.

Es hat sich als vorteilhaft erwiesen, die radikalische Emulsionspolymerisation in Gegenwart von Saatlatex durchzuführen. Ein Saatlatex ist ein Polymerlatex, der im wässrigen Polymerisationsmedium vorliegt, bevor mit der Dosierung der Monomere M begonnen wird.

Der Saatlatex kann dabei helfen, die Teilchengröße des bei der radikalischen Emulsionspolymerisation erhaltenen Polymerendlatex besser einzustellen.

Als Saatlatex kann prinzipiell jeder Polymerlatex dienen. Bevorzugt im Sinne der Erfindung sind Saatlatices, bei denen die Teilchengröße der Polymerteilchen vergleichsweise klein ist. Insbesondere liegt der Z-mittlere Teilchendurchmesser der Polymerteilchen des Saatlatex, bestimmt durch dynamische Lichtstreuung bei 20°C (siehe unten), vorzugsweise im Bereich von 10 bis 80nm, insbesondere von 10 bis 50 nm. Vorzugsweise bestehen die Polymerpartikel des Saatlatex aus ethylenisch ungesättigten Monomeren, die mindestens 95 Gew.-%, bezogen auf das Gesamtgewicht der den Saatlatex bildenden Monomeren, aus einem oder mehreren Monomeren M1a und/oder M1b enthalten oben definiert. Dabei enthalten die Polymerpartikel des Saatlatex insbesondere mindestens 95 Gew.-%, bezogen auf das Gesamtgewicht der den Saatlatex bildenden Monomeren.

Üblicherweise wird dazu der Saatlatex in das Polymerisationsgefäß vorgelegt, bevor mit der Dosierung der Monomere M begonnen wird. Insbesondere wird der Saatlatex in das Polymerisationsgefäß gefüllt und anschließend die Polymerisationsbedingungen eingestellt, z. B. durch Erhitzen der Mischung auf Polymerisationstemperatur. Es kann vorteilhaft sein, zumindest einen Teil des Radikalstarters in das Polymerisationsgefäß zu geben, bevor mit der Dosierung der Monomere M begonnen wird. Es ist aber auch möglich, die Monomere und den radikalischen Polymerisationsinitiator parallel zum Polymerisationsgefäß zu dosieren.

Die Menge an Saatlatex, berechnet als Feststoff, kann häufig im Bereich von 0,1 bis 10 Gew.-%, insbesondere 0,5 bis 5 Gew.-%, bezogen auf das Gesamtgewicht der zu polymerisierenden Monomere M, liegen. Die radikalische wässrige Emulsionspolymerisation kann bei Temperaturen im Bereich von 0 bis 170°C durchgeführt werden. Angewandte Temperaturen liegen im Allgemeinen im Bereich von 50 bis 120°C, häufig von 60 bis 120°C und oft von 70 bis 110°C. Die radikalische wässrige Emulsionspolymerisation kann bei einem Druck von weniger als, gleich oder mehr als 1atm (Atmosphärendruck) durchgeführt werden und so kann die Polymerisationstemperatur 100°C übersteigen und bis zu 170°C betragen.

Die Polymerisation der Monomere wird normalerweise bei Umgebungsdruck durchgeführt, sie kann aber auch unter erhöhtem Druck durchgeführt werden. Dabei kann der Druck Werte von 1,2, 1,5, 2, 5, 10, 15bar (absolut) oder noch höhere Werte annehmen. Werden Emulsionspolymerisationen im Vakuum durchgeführt, stellen sich Drücke von 950mbar, häufig von 900 mbar und oft von 850mbar (absolut) ein.

Vorteilhafterweise wird die radikalische wässrige Emulsionspolymerisation bei Umgebungsdruck (ca. 1atm) unter Sauerstoffausschluss durchgeführt, beispielsweise unter einer Inertgasatmosphäre, beispielsweise unter Stickstoff oder Argon.

Die Polymerisation der Monomere M kann gegebenenfalls in Gegenwart von Kettenübertragungsmitteln durchgeführt werden. Unter Kettenüberträgern werden Verbindungen verstanden, die freie Radikale übertragen und die das Molekulargewicht der Moleküle reduzieren oder das Kettenwachstum bei der Polymerisation steuern. Beispiele für Kettenüberträger sind aliphatische und/oder araliphatische Halogenverbindungen, beispielsweise n-Butylchlorid, n-Butylbromid, n-Butyliodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, beispielsweise Ethanthiol, n- Propanthiol, 2-Propanthiol, n-Butanthiol, 2 -Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2- Hexanthiol, 3-Hexanthiol , 2-Methyl-2-pentanthiol, 3-Methyl-2-Pentanthiol, 4-Methyl-2- pentanthiol, 2-Methyl-3-pentanthiol, 3- Methyl-3-Pentanthiol, 2-Ethylbutanthiol, 2-Ethyl-2- butanthiol, n-Heptanthiol und dessen isomere Verbindungen, n-Octanthiol und dessen isomere Verbindungen, n-Nonanthiol und dessen isomere Verbindungen, n-Decanthiol und die isomeren Verbindungen davon, n-Undecanthiol und die isomeren Verbindungen davon, n-Dodecanthiol und dessen isomere Verbindungen, n-Tridecanthiol und dessen isomere Verbindungen, substituierte Thiole, beispielsweise 2-Hydroxyethanthiol, aromatische Thiole wie Benzolthiol, ortho-, meta- oder para-Methylbenzolthiol, Alkylester der Mercaptoessigsäure (Thioglykolsäure), wie 2-Ethylhexylthioglykolat, Alkylester der Mercaptopropionsäure, wie Octylmercaptopropionat, sowie weitere Schwefelverbindungen, beschrieben in Polymer Handbook, 3. Auflage, 1989, J. Brandrup und E.H. Immergut, John Wiley & Sons, Abschnitt II, Seiten 133 bis 141 , aber auch aliphatische und/oder aromatische Aldehyde, wie Acetaldehyd, Propionaldehyd und/oder Benzaldehyd, ungesättigte Fettsäuren, wie Ölsäure, Diene mit nicht konjugierten Doppelbindungen, wie Divinylmethan oder Vinylcyclohexan, oder Kohlenwasserstoffe mit leicht abstrahierbaren Wasserstoffatomen, beispielsweise Toluol. Alternativ können Mischungen der vorgenannten Kettenüberträger eingesetzt werden, die sich nicht stören. Die Gesamtmenge an gegebenenfalls im Verfahren eingesetzten Kettenüberträgern, bezogen auf die Gesamtmenge an Monomeren M, wird im Allgemeinen 1 Gew.-% nicht überschreiten. Es ist jedoch möglich, dass während eines bestimmten Zeitraums der Polymerisationsreaktion die der Polymerisationsreaktion zugesetzte Menge an Kettenübertragungsmittel den Wert von 1 Gew.-% übersteigt, bezogen auf die Gesamtmenge an bereits der Polymerisationsreaktion zugesetzten Monomeren.

Die radikalische Emulsionspolymerisation erfolgt üblicherweise in einem wässrigen Polymerisationsmedium, das neben Wasser mindestens eine oberflächenaktive Substanz (Tensid) zur Stabilisierung der Emulsion der Monomere und der Polymerpartikel enthält.

Das Tensid kann aus Emulgatoren und Schutzkolloiden ausgewählt werden. Unter Schutzkolloiden werden im Gegensatz zu Emulgatoren polymere Verbindungen mit Molekulargewichten über 2000 Dalton verstanden, während Emulgatoren typischerweise niedrigere Molekulargewichte aufweisen. Die Tenside können anionische oder nichtionische oder Mischungen aus nichtionischen und anionischen Tensiden sein.

Anionische Tenside tragen üblicherweise mindestens eine anionische Gruppe, die ausgewählt ist aus Phosphat-, Phosphonat-, Sulfat- und Sulfonatgruppen. Die anionischen Tenside, die mindestens eine anionische Gruppe tragen, werden üblicherweise in Form ihrer Alkalimetallsalze, insbesondere ihrer Natriumsalze oder in Form ihrer Ammoniumsalze eingesetzt. Bevorzugte anionische Tenside sind anionische Emulgatoren, insbesondere solche, die mindestens eine Sulfat- oder Sulfonatgruppe tragen.

Beispiele für anionische Emulgatoren, die mindestens eine Sulfat- oder Sulfonatgruppe tragen, sind beispielsweise

- die Salze, insbesondere die Alkali- und Ammoniumsalze, von Alkylsulfaten, insbesondere von $C_8$-$C_{22}$-Alkylsulfaten,

- die Salze, insbesondere die Alkali- und Ammoniumsalze, von Schwefelsäuremonoestern ethoxylierter Alkanole, insbesondere von Schwefelsäuremonoestern von ethoxylierten $C_8$-$C_{22}$-Alkanolen, vorzugsweise mit einem Ethoxylierungsgrad (EO-Level) im Bereich von 2 bis 40,

- die Salze, insbesondere die Alkali- und Ammoniumsalze, von Schwefelsäuremonoestern ethoxylierter Alkylphenole, insbesondere von Schwefelsäuremonoestern ethoxylierter $C_4$-$C_{18}$-Alkylphenole (EO- Gehalt bevorzugt 3 bis 40),

- die Salze, insbesondere die Alkali- und Ammoniumsalze, von Alkylsulfonsäuren, insbesondere von $C_8$-$C_{22}$-Alkylsulfonsäuren,

- die Salze, insbesondere die Alkali- und Ammoniumsalze, von Dialkylestern, insbesondere $C_4$-$C_{18}$-Alkylestern der Sulfobernsteinsäure,

- die Salze, insbesondere die Alkali- und Ammoniumsalze, von Alkylbenzolsulfonsäuren, insbesondere von $C_4$-$C_{22}$-Alkylbenzolsulfonsäuren, und die Salze, insbesondere die Alkali- und Ammoniumsalze, von mono- oder disulfonierten, alkylsubstituierten Diphenylethern, beispielsweise von Bis(phenylsulfonsäure)ethern, die an einem oder beiden Aromaten eine $C_4$-$C_{24}$- Alkylgruppe tragen. Letztere sind allgemein bekannt, beispielsweise aus US-A- 4,269,749, und sind kommerziell erhältlich, beispielsweise als Dowfax® 2A1 (Dow Chemical Company).

Ebenfalls geeignet sind Mischungen der vorgenannten Salze.

Bevorzugte anionische Tenside sind anionische Emulgatoren, die aus den folgenden Gruppen ausgewählt sind:

- die Salze, insbesondere die Alkali- und Ammoniumsalze, von Alkylsulfaten, insbesondere von $C_8$-$C_{22}$-Alkylsulfaten,

- die Salze, insbesondere die Alkalimetallsalze, von Schwefelsäuremonoestern von ethoxylierten Alkanolen, insbesondere von Schwefelsäuremonoestern von ethoxylierten $C_8$-$C_{22}$-Alkanolen, vorzugsweise mit einem Ethoxylierungsgrad (EO-Level) im Bereich von 2 bis 40,

- von Schwefelsäuremonoester von ethoxylierten Alkylphenolen, insbesondere von Schwefelsäuremonoestern von ethoxylierten $C_4$-$C_{18}$-Alkylphenolen (EO-Gehalt vorzugsweise 3 bis 40),

- von Alkylbenzolsulfonsäuren, insbesondere von $C_4$-$C_{22}$-Alkylbenzolsulfonsäuren, und von mono- oder disulfonierten, alkylsubstituierten Diphenylethern, beispielsweise von Bis(phenylsulfonsäure)ethern, die an einem oder beiden aromatischen Ringen eine $C_4$-$C_{24}$-Alkylgruppe tragen.

Beispiele für anionische Emulgatoren, die eine Phosphat- oder Phosphonatgruppe tragen, umfassen, sind aber nicht beschränkt auf die folgenden Salze, ausgewählt aus den folgenden Gruppen:

- die Salze, insbesondere die Alkalimetall- und Ammoniumsalze, von Mono- und Dialkylphosphaten, insbesondere $C_8$-$C_{22}$-Alkylphosphate,

- die Salze, insbesondere die Alkali- und Ammoniumsalze, von Phosphorsäurehalbestern von $C_2$-$C_3$-alkoxylierten Alkanolen, vorzugsweise mit einem Alkoxylierungsgrad im Bereich von 2 bis 40, insbesondere im Bereich von 3 bis 30, z.B. Phosphorsäuremonoester von ethoxylierten $C_8$-$C_{22}$-Alkanolen, bevorzugt mit einem Ethoxylierungsgrad (EO-Level) im Bereich von 2 bis 40, Phosphorsäuremonoester von propoxylierten $C_8$-$C_{22}$-Alkanolen, bevorzugt mit einem Propoxylierungsgrad (PO-Level).) im Bereich von 2 bis 40 und Phosphorsäurehalbester von ethoxyliertem-co-propoxyliertem $C_8$-$C_{22}$-Alkanole, vorzugsweise mit einem Ethoxylierungsgrad (EO-Level) im Bereich von 1 bis 20 und einem Propoxylierungsgrad von 1 bis 20,

- die Salze, insbesondere die Alkali- und Ammoniumsalze, von Phosphorsäuremonoestern ethoxylierter Alkylphenole, insbesondere Phosphorsäuremonoester von ethoxylierten $C_4$-$C_{18}$-Alkylphenolen (EO- Gehalt vorzugsweise 3 bis 40),

- die Salze, insbesondere die Alkali- und Ammoniumsalze, von Alkylphosphonsäuren, insbesondere $C_8$-$C_{22}$-Alkylphosphonsäuren und

- die Salze, insbesondere die Alkalimetall- und Ammoniumsalze, von Alkylbenzolphosphonsäuren, insbesondere $C_8$-$C_{22}$-Alkylbenzolphosphonsäuren.

Weitere geeignete anionische Tenside finden sich in Houben-Weyl, Methoden der organischen Chemie, Band XIV/1, Makromolekulare Stoffe, Georg-Thieme-Verlag, Stuttgart, 1961, p. 192-208.

Vorzugsweise umfasst das Tensid mindestens einen anionischen Emulgator, der mindestens eine Sulfat- oder Sulfonatgruppe trägt, der mindestens einen anionischen Emulgator, der mindestens eine Sulfat- oder Sulfonatgruppe trägt. Dies kann die einzige Art von anionischen Emulgatoren sein. Es können aber auch Mischungen aus mindestens einem anionischen Emulgator, der mindestens eine Sulfat- oder Sulfonatgruppe trägt, und mindestens einem anionischen Emulgator, der mindestens eine Phosphat- oder Phosphonatgruppe trägt, eingesetzt werden. In solchen Mischungen beträgt die Menge des mindestens einen anionischen Emulgators, der mindestens eine Sulfat- oder Sulfonatgruppe trägt, vorzugsweise mindestens 50 Gew.-%, bezogen auf das Gesamtgewicht der im Verfahren eingesetzten anionischen Tenside. Insbesondere darf die Menge an anionischen Emulgatoren, die mindestens eine Phosphat- oder Phosphonatgruppe tragen, 20 Gew.-%, bezogen auf das Gesamtgewicht der im Verfahren eingesetzten anionischen Tenside, nicht überschreiten.

Neben den vorgenannten anionischen Tensiden kann das Tensid auch eine oder mehrere nichtionische oberflächenaktive Substanzen enthalten, die insbesondere ausgewählt sind aus nichtionischen Emulgatoren. Geeignete nichtionische Emulgatoren sind z.B. araliphatische oder aliphatische nichtionische Emulgatoren, beispielsweise ethoxylierte Mono-, Di- und Trialkylphenole (EO-Level: 3 bis 50, Alkylrest: $C_4$-$C_{10}$), Ethoxylate langkettiger Alkohole (EO-Level: 3 bis 100, Alkylrest: $C_8$-$C_{36}$) und Polyethylenoxid/Polypropylenoxid- Homo- und Copolymere. Diese können die Alkylenoxideinheiten statistisch verteilt oder in Form von Blöcken einpolymerisiert enthalten. Sehr geeignete Beispiele sind die EO/PO- Blockcopolymere. Bevorzugt sind Ethoxylate langkettiger Alkanole, insbesondere solche mit einem mittleren Ethoxylierungsgrad von 5 bis 100 im Alkylrest $C_8$-$C_{30}$ und hierunter besonders bevorzugt solche mit linearem $C_{12}$-$C_{20}$ Alkylrest und einem mittleren Ethoxylierungsgrad von 10 bis 50, sowie auf ethoxylierte Monoalkylphenole.

In einer besonderen Ausführungsform der Erfindung enthalten die im Verfahren eingesetzten Tenside weniger als 20 Gew.-%, insbesondere höchstens 10 Gew.-% nichtionische Tenside, bezogen auf die Gesamtmenge an eingesetzten Tensiden im Verfahren der vorliegenden Erfindung und enthalten insbesondere kein nichtionisches Tensid. In einer anderen Ausführungsform der Erfindung umfassen die in dem Verfahren der vorliegenden Erfindung verwendeten Tenside mindestens ein anionisches Tensid und mindestens ein nichtionisches Tensid, wobei das Verhältnis von anionischen Tensiden zu nichtionischen Tensiden gewöhnlich im Bereich von 0,5:1 bis 10:1, insbesondere 1:1 bis 5:1, ist.

Vorzugsweise wird man das Tensid in einer solchen Menge einsetzen, dass die Tensidmenge im Bereich von 0,2 bis 5 Gew.-%, insbesondere im Bereich von 0,5 bis 3 Gew.-%, bezogen auf die Monomere M, liegt.

Das wässrige Reaktionsmedium bei der Polymerisation kann grundsätzlich auch untergeordnete Mengen (meist höchstens 5 Gew.-%) wasserlöslicher organischer Lösungsmittel enthalten, beispielsweise Methanol, Ethanol, Isopropanol, Butanole, Pentanole, aber auch Aceton etc. Vorzugsweise wird das Verfahren jedoch in Abwesenheit solcher Lösungsmittel durchgeführt.

Häufig ist es vorteilhaft, wenn die nach Beendigung der Polymerisation der Monomeren M erhaltene wässrige Polymerisatdispersion einer Nachbehandlung zur Reduzierung des Restmonomerengehaltes unterzogen wird. Diese Nachbehandlung erfolgt entweder chemisch, z.B. durch Vervollständigung der Polymerisationsreaktion mit einem effektiveren Radikalstartersystem (sog. Nachpolymerisation), und/oder physikalisch, z.B. durch Strippen der wässrigen Polymerdispersion mit Wasserdampf oder Inertgas. Entsprechende chemische und physikalische Verfahren sind dem Fachmann geläufig - siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und DE-A 19847115. Die Kombination aus chemischer und physikalischer Nachbehandlung hat den Vorteil, dass sie neben den nicht umgesetzten ethylenisch ungesättigten Monomeren auch andere störende flüchtige organische Bestandteile (VOCs) aus der wässrigen Polymerdispersion entfernt.

Der Polymerlatex des carboxylierten Polymers ist beispielsweise erhältlich durch eine einstufige oder durch eine mehrstufige Emulsionspolymerisation, insbesondere eine wässrige radikalische Emulsionspolymerisation, einer Monomerzusammensetzung M. Der Begriff "mehrstufig" ist im Zusammenhang mit der wässrigen Emulsionspolymerisation gut verständlich und bedeutet, dass die relative Konzentration der Monomere in der der Polymerisationsreaktion zugesetzten Monomerzusammensetzung M mindestens einmal während der wässrigen Emulsionspolymerisation verändert wird. Ein solches Verfahren führt zu mindestens zwei Polymerpopulationen unterschiedlicher Monomerzusammensetzungen in den Polymerteilchen des Latex. Beispielsweise wird es möglich sein, die Monomerzusammensetzung so zu verändern, dass das mehrstufige Latexpolymer Populationen mit unterschiedlichen Glasübergangstemperaturen oder einem Glasübergangstemperatur-$(T_g)$-Gefälle aufweist. Es ist auch möglich, die Monomerzusammensetzung so zu ändern, dass das mehrstufige Latexpolymer Populationen mit unterschiedlichen Konzentrationen an polymerisierten sauren Monomeren, wie beispielsweise Monomeren M2 oder einem Konzentrationsgradienten an Monomeren M2, aufweist. Während der Zugabe der Monomeren M kann die Art der Monomeren und/oder deren Mengenverhältnis kontinuierlich oder stufenweise verändert werden. Die Polymerisationsreaktion bleibt dabei konstant. Beispielsweise ist es möglich, dass das Verhältnis der Monomere M1 und M2 während der Zugabe zunimmt oder abnimmt.

Vorzugsweise wird der wässrige Polymerlatex des carboxylierten Polymers durch eine radikalische wässrige Emulsionspolymerisation nach dem sogenannten Zulaufverfahren hergestellt, wobei während des Zulaufs der Monomerzusammensetzung M mindestens 90 % der Monomerzusammensetzung M zu polymerisierenden Polymerisaten unter Polymerisationsbedingungen während einer Dosierzeit P der Polymerisationsreaktion zudosiert werden, und wobei die Zusammensetzung des Teils der Monomerzusammensetzung M, der unter Polymerisationsbedingungen der Polymerisationsreaktion zudosiert wird, während der Dosierzeit mindestens einmal geändert wird.

In einer besonderen Ausführungsform wird der Gehalt an Monomeren M2 in der Monomerzusammensetzung M, d.h. die relative Menge an Monomeren M2 zum Gewicht der Monomerzusammensetzung M, die der Polymerisationsreaktion zugeführt wird, auf ein höheres Niveau erhöht, für eine oder mehrere begrenzte Zeitperioden P(n). Nach jedem dieser Zeiträume wird die relative Menge der Monomere M2 verringert. Während jeder der Perioden P(n) ist die relative Menge an Monomeren M2 zur Gesamtmenge an Monomeren, die während dieser Periode zugeführt werden, um mindestens 0,5pphm höher, insbesondere um mindestens 1,0pphm höher als das Niveau außerhalb der Perioden.

Insbesondere ist die während der Perioden P(n) zugeführte Menge an Monomeren M2 um 0,5 bis 80pphm, insbesondere 1,0 bis 50pphm höher als die durchschnittliche Menge an Monomeren M2, die außerhalb der Perioden P(n) zugeführt wird.

Hier und in der gesamten Beschreibung und insbesondere in dieser Ausführungsform wird der Begriff pphm (Teile pro hundert Monomere) als Synonym für die relative Menge eines bestimmten Monomers zur Gesamtmenge der Monomerzusammensetzung M in Gew.-% verwendet. Beispielsweise bedeutet x pphm Monomer M2 x Gew.-% an Monomeren M2, bezogen auf die Gesamtmenge an Monomeren der Monomerzusammensetzung M. Eine Erhöhung von y pphm bedeutet, dass die relative Menge eines bestimmten Monomers um y Gew.-% erhöht wird, bezogen auf das Gesamtgewicht der Monomere der Monomerzusammensetzung M.

In dieser speziellen Ausführungsform kann es einen einzelnen Zeitraum P(n) geben, während dessen das Gewichtsniveau der Monomere M2 erhöht wird. Es kann jedoch auch mehr als eine Periode P(n) geben. Die Gesamtzahl der Perioden P(n) ist nicht besonders beschränkt und kann bis zu 20 oder sogar mehr betragen. Aus praktischen Gründen wird die Gesamtzahl der Perioden P(n) im Allgemeinen 10 nicht übersteigen und insbesondere 1 bis 6 betragen.

In dieser besonderen Ausführungsform ist der Gehalt an Monomeren M2 in der Monomerzusammensetzung M, die außerhalb der Perioden P(n), d.h. der Gehalt an Monomeren M2 vor und nach jeder Periode P(n), kann gleich sein oder leicht variieren. Die Schwankung des Gehalts an Monomeren M2 außerhalb der Perioden P(n) beträgt normalerweise nicht mehr als 1pphm, insbesondere nicht mehr als 0,5pphm. Die hier angegebenen Werte beziehen sich auf die Mittelwerte während der Perioden P(n) und außerhalb der Perioden P(n). Vorzugsweise liegt der Gehalt an Monomeren M2 innerhalb der Perioden P(n) im Bereich von 1,5 bis 85pphm, insbesondere 2 bis 50pphm.

In dieser besonderen Ausführungsform kann/können die Periode(n) P(n), in der/denen die Konzentration der sauren Monomere M2 erhöht wird, vollständig innerhalb der Periode P oder am Ende der Periode P liegen. In dieser besonderen Ausführungsform ist wichtig, dass der erste Zeitraum P(n) nicht beginnt, bevor mindestens 5% der Monomere M, insbesondere mindestens 10% der Monomere M, die der Emulsionspolymerisation unterzogen werden, der Polymerisationsreaktion zudosiert wurden. Während dieser Zeitspanne(n) P(n) beträgt das Gewichtsverhältnis der sauren Monomere M2 zur Gesamtmenge der anderen Monomere M1 + M3 in der Monomerzusammensetzung, die der Polymerisationsreaktion zudosiert wird, häufig mindestens 0,02:1, insbesondere mindestens 0,03:1. Vor jedem solchen Zeitraum P(n) sollte das Verhältnis der sauren Monomere M2 zur Gesamtmenge der anderen Monomere M1 + M3 kleiner als 0,03:1, insbesondere kleiner als 0,02:1 sein. Ebenso sollte am Ende jeder Periode P(n) das Verhältnis der sauren Monomere M2 zur Gesamtmenge der anderen Monomere M1 + M3 auf weniger als 0,03:1, insbesondere weniger als 0,02:1, verringert werden.

Vorzugsweise ist der Gehalt an Monomeren M2 in der Monomerzusammensetzung und ebenso das Gewichtsverhältnis der sauren Monomere M2 zur Gesamtmenge der anderen Monomere M1 + M3 in der Monomerzusammensetzung M, die der Polymerisationsreaktion zudosiert wird, manipulierbar. Beispielsweise kann eine einzige Zuleitung zur Dosierung der Monomere M in die Polymerisationsreaktion verwendet werden. Durch Erhöhung der Konzentration der Monomere M2 in der einzigen Zuleitung der Monomere M oder durch Erniedrigung der Gesamtkonzentrationen der Monomere M1 + M3 oder durch beide Maßnahmen kann das Verhältnis der sauren Monomere M2 zur Gesamtmenge der anderen Monomere M1 + M3 gesenkt werden oder erhöht werden. Ein Teil der Monomere M2, z.B. mindestens 20 %, insbesondere mindestens 30 %.

Es ist ersichtlich, dass die Gesamtdauer aller Perioden P(n) kürzer ist als die Dauer der Periode P, die für die Dosierung der Gesamtmenge an Monomeren M in die Polymerisationsreaktion benötigt wird. Häufig überschreitet die Gesamtdauer aller Perioden P(n) 50 %, insbesondere 40 % und insbesondere 30 % der Dauer der Periode P nicht.

Häufig beträgt die Gesamtdauer aller Perioden P(n) mindestens 0,2 %, insbesondere mindestens 0,5 % und insbesondere mindestens 1 % der Dauer der Periode P. Insbesondere beträgt das Verhältnis der Gesamtdauer von allen Perioden P(n) zur Dauer der Periode P von 0,002:1 bis 0,5:1, insbesondere von 0,005:1 bis 0,30:1. Häufig beträgt die Gesamtdauer aller Perioden P(n) 30 Sekunden bis 60 Minuten. Die Dauer einer einzelnen Periode P(n) ist von untergeordneter Bedeutung und kann einige Sekunden betragen, z.B. 10 Sekunden, und bis zu 60 Minuten oder mehr betragen. Die Dauer einer Periode P kann von der Produktionsanlage abhängen und kann von z.B. 20 Minuten bis 12 h variieren.

Häufig wird sie im Bereich von 0,5 h bis 5 h, insbesondere von 1 h bis 4 h liegen.

In dieser besonderen Ausführungsform ist es möglich, die Gesamtmenge an in der Monomerzusammensetzung M enthaltenen Monomeren M2 während des mindestens einen Zeitraums P(n), also während aller Zeiträume P(n), zuzugeben. Es ist jedoch nicht erforderlich, während des mindestens einen Zeitraums P(n) die Gesamtmenge an Monomeren M2 zuzugeben. Vielmehr ist es bevorzugt, dass außerhalb der Zeiträume P(n) die der Polymerisationsreaktion zudosierte Monomerzusammensetzung noch ein oder mehrere Monomere M2 enthält. Häufig werden während des mindestens einen Zeitraums P(n) mindestens 20% der in der Monomerzusammensetzung M enthaltenen Monomere M2, insbesondere mindestens 30% der in der Monomerzusammensetzung M enthaltenen Monomere M2 der Polymerisationsreaktion zudosiert.

Die Konzentration des in der wässrigen Bindemittelzusammensetzung enthaltenen Polymerlatex liegt häufig im Bereich von 10 bis 70 Gew.-%, insbesondere im Bereich von 30 bis 69 Gew.-%, insbesondere im Bereich von 40 bis 68 Gew.-% nach Gewicht, bezogen auf das Gesamtgewicht der Bindemittelzusammensetzung.

Die wässrige Bindemittelzusammensetzung besteht üblicherweise aus dem wässrigen Polymerlatex eines filmbildenden carboxylierten Polymers, wie hierin beschrieben, und dem verzweigten Polyetheraminpolyol wie hierin beschrieben und Wasser. Gegebenenfalls enthält die wässrige Bindemittelzusammensetzung jedoch weitere Komponenten wie beispielsweise Dispergiermittel, Biozide, Netzmittel, Entschäumer, Rheologieadditive und/oder Füllstoffe.

Bevorzugte Ausführungsformen der wässrigen Bindemittelzusammensetzung, die in den Brandschutzzusammensetzungen auf Wasserbasis enthalten sind, sind die oben erwähnten.

In einigen Ausführungsformen liegt das wässrige Bindemittel in einer Menge von etwa 20 Gew.-% bis etwa 50 Gew.-% vor, bezogen auf das Gesamtgewicht der wässrigen Brandschutzzusammensetzung. In einigen Ausführungsformen liegt das wässrige Bindemittel in einer Menge von etwa 25 Gew.-% bis etwa 45 Gew.-%, bevorzugt von etwa 30 Gew.-% bis etwa 40 Gew.-% vor, bezogen auf das Gesamtgewicht der wässrigen Brandschutzzusammensetzung.

Aus EP 3910034 A1 ist bekannt, dass die Brandschutzzusammensetzung das Bauteil, auf das sie aufgebracht wird, im Brandfall vor Feuer oder gegen große Hitzeeinwirkung nur dann schützen kann, wenn die Brandschutzzusammensetzung nach der Aushärtung eine isolierende Schicht bildet, die sogenannte Brandschutzbeschichtung. Zur Gewährleistung eines ausreichenden Brandschutzes beträgt der Feststoffanteil der Brandschutzzusammensetzung erfindungsgemäß mindestens 50 Gew.-% bezogen auf das Gesamtgewicht der Brandschutzzusammensetzung. Der Begriff "Feststoffanteil" im Sinne der vorliegenden Erfindung beschreibt den Anteil der Verbindungen in der Brandschutzzusammensetzung, die bei Raumtemperatur fest sind. Hiervon ausgenommen sind ggf. bei Raumtemperatur feste Bindemittel, welche in der Brandschutzzusammensetzung enthalten sein können. Der Feststoffanteil der Brandschutzzusammensetzung lässt sich somit über den Füllstoffgehalt der Brandschutzzusammensetzung berechnen. Bevorzugt liegt der Feststoffanteil in einem Bereich von 50 Gew.-% bis 85 Gew.-%, bevorzugt in einem Bereich von 55 Gew.-% bis 80 Gew.-%, weiter bevorzugt in einem Bereich von 60% bis 78% Gew.-%.

Die hierin beschriebenen verzweigten Polyetheraminpolyole haben eine überlegene Wirkung in Bezug auf das Härtungs- und/oder Härtungsverhalten von Polymerbindemitteln, wie filmbildenden carboxylierten Polymeren. Insbesondere beschleunigen die verzweigten Polyetheraminpolyole den Filmbildungsprozess, womit eine beschleunigte Aushärtung des Bindemittels einher geht, was insgesamt die Aushärtung der erfindungsgemäßen Brandschutzzusammensetzung beschleunigt. Physikalisch härtende wässrige Brandschutzzusammensetzungen können somit in höherer Schichtdicke appliziert werden, mit geringerem Arbeitsaufwand aufgebracht werden und nach kürzerer Wartezeit mit weiteren Beschichtungen überschichtet werden.

*Intumeszierend wirkende Brandschutzadditive*

Erfindungsgemäß umfasst die wässrige Brandschutzzusammensetzung mindestens ein intumeszierend wirkendes Brandschutzadditiv (auch Brandschutzadditiv), wobei das Brandschutzadditiv sowohl eine einzelne Verbindung als auch ein Gemisch von mehreren Verbindungen umfassen kann.

Zweckmäßig werden als intumeszierend wirkende Brandschutzadditive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken.

Die Bildung einer voluminösen, isolierenden Schicht, nämlich einer Ascheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils allein oder zusammen als Kombination erfindungsgemäß eingesetzt werden.

Für die Ausbildung einer intumeszierenden Schicht durch chemische Intumeszenz sind allgemein als intumeszierend wirkende Brandschutzadditiv wenigstens drei Komponenten erforderlich, ein Kohlenstofflieferant, ein Dehydrierungskatalysator (auch Säurebildner genannt) und ein Gasbildner (auch Treibmittel genannt), die häufig in einem Bindemittel enthalten sind. Die Komponenten des intumeszierend wirkenden Brandschutzadditivs werden insbesondere so ausgewählt, dass sie einen Synergismus entwickeln können, wobei einige der Verbindungen mehrere Funktionen erfüllen können.

Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

Es sei erwähnt, dass bei der erfindungsgemäßen wässrigen Brandschutzzusammensetzung das wässrige Bindemittel im Brandfall selbst auch die Funktion des Kohlenstofflieferanten hat, so dass es nicht zwingend erforderlich ist, weitere Verbindungen hinzuzugeben, die diese Funktion erfüllen. Es sind somit alle drei für die Intumeszenz notwendigen Verbindungen vorhanden, wobei in diesem Fall das intumeszierend wirkende Brandschutzadditiv mindestens einen Dehydrierungskatalysator und mindestens einen Gasbildner umfasst.

In einer solchen Ausführungsform der Erfindung, in der die isolierende Schicht durch chemische Intumeszenz gebildet wird, umfasst daher das intumeszierend wirkende Brandschutzadditiv mindestens einen Dehydrierungskatalysator und mindestens ein Gasbildner.

Als Dehydrierungskatalysatoren, die zusätzlich auch eine hohe Lagerstabilität in wasserbasierten Dispersionen aufweisen, kommen die in intumeszierenden Brandschutzformulierungen üblicherweise verwendeten und dem Fachmann bekannten Verbindungen in Betracht, insbesondere ein Salz oder ein Ester einer anorganischen, nicht flüchtigen Säure, ausgewählt unter Schwefelsäure, Phosphorsäure oder Borsäure. Im Wesentlichen werden beschichtete phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Um jedoch gleichzeitig die Lagerstabilität der wasserbasierten Dispersion zu erhöhen, eignen sich beschichtete oder/und verkapselte Säurebildner hervorragend in der hier vorliegenden Brandschutzzusammensetzung. Beispiele hierfür sind die kommerziell erhältlichen Produkte Exolit® AP 462, Exolit® AP 750, Exolit® AP435, FR CROS® C70, FR CROS® 486, FR CROS® 584 und Exflam APP 205, der Firmen Clariant, Budenheim und Wellchem. Diese Produkte weisen jeweils eine Beschichtung beispielsweise durch Melamin, auf Silikonbasis, oder Epoxybasis auf.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US 3 969 291 A1 beschrieben.

In einer weiteren Ausführungsform der Erfindung, in der die isolierende Schicht durch chemische Intumeszenz gebildet wird, umfasst das intumeszierend wirkende Brandschutzadditiv mindestens einen (weiteren) Kohlenstofflieferant, mindestens einen Dehydrierungskatalysator und mindestens ein Gasbildner.

Als gegebenenfalls weiterer Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)-Polyole. Bevorzugt werden Pentaerythrit, Dipentaerythrit oder Polyvinylacetat eingesetzt.

Besonders bevorzugt kommen als weiterer Kohlenstofflieferant Verbindungen auf Basis von Pentaerithryt in Frage, bei denen zudem die freien Hydroxidgruppen durch weitere Substituenten geschützt werden, da sie zudem eine hohe Lagerstabilität in wasserbasierten Dispersionen aufweisen. Beispiele dafür sind Pentaerythritol Tetraacetat, Pentaerythritol Tetraacrylate und Pentraerythritol Tetrabenzoat.

In einer Ausführungsform der Erfindung, in der die isolierende Schicht durch physikalische Intumeszenz gebildet wird, umfasst das intumeszierend wirkende Brandschutzadditiv mindestens eine thermisch expandierbare Verbindung, wie eine Graphit-Interkalationsverbindung, die auch als Blähgraphit bekannt sind.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$, $CO_2$, $H_2O$, NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich.

In einer weiteren Ausführungsform der Erfindung wird die isolierende Schicht sowohl durch chemische als auch durch physikalische Intumeszenz gebildet, so dass das intumeszierend wirkende Brandschutzadditiv sowohl einen Kohlenstofflieferanten, einen Dehydrierungskatalysator und ein Gasbildner als auch thermisch expandierbare Verbindungen umfasst.

Prinzipiell kann das intumeszierend wirkende Brandschutzadditiv in einem großen gewichtsprozentualen Bereich in der wässrigen Brandschutzzusammensetzung enthalten sein. Vorzugsweise ist das intumeszierend wirkende Brandschutzadditiv in einer Menge von mehr als 30 Gew.-% in der wässrigen Brandschutzzusammensetzung enthalten, wobei die Menge im Wesentlichen von der Art des intumeszierend wirkenden Brandschutzadditivs und der Applikationsform der Brandschutzzusammensetzung (Sprühen, Pinseln und dergleichen) abhängt. Um eine möglichst hohe Intumeszenzrate zu bewirken, wird der Anteil in der Brandschutzzusammensetzung so hoch wie möglich eingestellt, wobei darauf geachtet werden muss, dass die Viskosität der Brandschutzzusammensetzung nicht zu hoch wird, damit sich die Brandschutzzusammensetzung noch gut verarbeiten lässt.

Vorzugsweise ist das intumeszierend wirkende Brandschutzadditiv in der Brandschutzzusammensetzung in einem Anteil von mindestens 30 Gew.-% enthalten. Bevorzugt liegt der Anteil an intumeszierend wirkendem Brandschutzadditiv in einem Bereich von 30 Gew.-% bis 80 Gew.-%, bevorzugt 35 Gew.-% bis 75 Gew.-%, weiter bevorzugt in einem Bereich von 35 Gew.-% bis 70 Gew.-%, weiter bevorzugt in einem Bereich von 40 Gew.-% bis 60% Gew.-% und noch weiter bevorzugt in einem Bereich von 40 Gew.-% bis 55 Gew.-%, bezogen auf das Gesamtgewicht der wässrigen Brandschutzzusammensetzung.

Im Falle der chemischen Intumeszenz ist es bevorzugt, dass der Anteil des intumeszierend wirkenden Brandschutzadditivs 45 Gew.-% oder mehr, insbesondere von 40 Gew.-% bis 55 Gew.-% beträgt, bezogen auf das Gesamtgewicht der wässrigen Brandschutzzusammensetzung.

Im Falle der physikalischen Intumeszenz ist es für eine gute Intumeszenzwirkung ausreichend, dass der Anteil des intumeszierend wirkenden Brandschutzadditivs 30 Gew.-% oder mehr beträgt, bezogen auf das Gesamtgewicht der wässrigen Brandschutzzusammensetzung.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Brandschutzbeschichtung auswirkt, wird zu den eben aufgeführten Brandschutzadditiven bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen (auch anorganische Gerüstbildner) mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern.

In einer besonders bevorzugten Ausführungsform der Erfindung umfasst die wässrige Brandschutzzusammensetzung ferner faserförmige, thermisch stabile, oder hochschmelzende Zuschläge, wie z.B. Glasfasern oder Mineralfasern die Aschestabilität unterstützt. Geeignete Fasern, die in der erfindungsgemäßen wässrigen intumeszierenden Brandschutzzusammensetzung verwendet werden können, sind anorganische Fasern. Typische anorganische Fasern sind: Karbidfasern, wie z. B. Borcarbidfasern, Siliciumcarbidfasern, Niobcarbidfasern usw. Nitridfasern, wie z. B. Siliziumnitridfasern; borhaltige Fasern, wie z. B. Borfasern, Boridfasern; siliziumhaltige Fasern, wie z. B. Siliziumfasern, Aluminiumoxid-Bor-Kieselerde-Fasern, E-Glasfasern (nicht basische Aluminiumborate), C-Glasfasern (nicht basische oder niedrig basische Natriumaluminiumborosilikatfasern), A-Glasfasern (basische Natriumsilikatfasern), S-Glasfasern, anorganische Glasfasern, Quarzfasern usw. Zu den Glasfasern können E-Glasfasern, C-Glasfasern, A-Glasfasern, S-Glasfasern usw. gehören. Ferner können auch Keramikfasern und Basaltfasern verwendet werden. Auch Kevlar (Para-Aramidfasern) kann verwendet werden. Beispielhaft können folgende Faserprodukte genannt werden: Rockforce® MS603, Rockforce® MS605, CoatForce® CF30, CoatForce® CF50, FGCS 8069, FGCS ECR 416, FGCS ECR 316.

Wenn vorhanden, sind die Fasern vorzugsweise in einer Menge von 0,3 bis 15 Gew.-% und noch bevorzugter in einer Menge von 0,5 bis 6 Gew.-%, bezogen auf das Gesamtgewicht der Beschichtungszusammensetzung, vorhanden.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengröße von ≤50 μm, vorzugsweise von 0,5 bis 10 μm besitzt. Im Fall der Verwendung des teilchenförmigen Metalls in Form von Fasern, Fäden und/oder Whiskers ist eine Dicke von 0,5 bis 10 μm und eine Länge von 10 bis 50 μm bevorzugt. Als Aschekrustenstabilisator kann alternativ oder zusätzlich ein Oxid oder eine Verbindung eines Metalls aus der Titan, Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Kalziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Für die Zwecke des Brandschutzes von Konstruktionselementen, insbesondere aus Stahl, ist es bevorzugt, wenn die isolierende Schicht durch chemische Intumeszenz gebildet wird und entsprechend stabilisiert wird.

In einer bevorzugten Ausführungsform der Erfindung, in der die isolierende Schicht durch chemische Intumeszenz gebildet wird, umfasst daher das intumeszierend wirkende Brandschutzadditiv mindestens einen Dehydrierungskatalysator, mindestens einen Gasbildner und mindestens einen Aschekrustenstabilisator, insbesondere ein Oxid oder eine Verbindung eines Metalls aus der Titan, Aluminium, Magnesium, Eisen oder Zink umfassenden Gruppe, ganz besonders Titandioxid. Hierdurch kann eine besonders gute Brandperformance erreicht werden.

In einer noch weiter bevorzugten Ausführungsform der Erfindung, in der die isolierende Schicht durch chemische Intumeszenz gebildet wird, umfasst das intumeszierend wirkende Brandschutzadditiv mindestens einen Dehydrierungskatalysator, mindestens einen Gasbildner, mindestens einen Aschekrustenstabilisator und ein anorganische Fasern, insbesondere Glasfasern oder Mineralfasern. Hierdurch lässt sich sowohl die Brandperformance als auch das Erscheinungsbild der ausgehärteten bzw. getrockneten Beschichtung vor allem bei Anwendung der Beschichtungszusammensetzung auf Kanten und in Ecken verbessern.

Dem Fachmann ist hinreichend bekannt, dass das Gewichts-Verhältnis der 4 Hauptkomponenten des intumeszierend wirkenden Brandschutzadditivs, Kohlenstoffgerüstbildner : Säurebildner : Gasbildner : Aschekrustenstabilisator 0,7-1,3 : 2,7-3,7 : 0,7-1,3 : 0,7-1,3, bevorzugt 1:3,5:1:1 betragen soll.

*Verbindung zur Verbesserung der Mikroorganismenbeständigkeit*

Ein Nachteil physikalisch härtender Brandschutzzusammensetzungen auf Basis wässriger Dispersionen besteht darin, dass sie neben Wasser eine Vielzahl an Verbindungen enthalten, die eine Schimmelbildung begünstigen und als Nährboden für Mikroorganismen dienen. Zudem dauert es je nach Umgebungsbedingungen eine gewisse Zeit, bis die aufgetragenen Brandschutzzusammensetzung, getrocknet ist. Je länger die Trocknungszeit ist, desto größer ist die Wahrscheinlichkeit, dass die feuchte Beschichtung von Mikroorganismen befallen wird.

Zur Verbesserung der Widerstandfähigkeit der wässrigen Brandschutzzusammensetzung insbesondere nach deren Auftragen auf ein Substrat sowie der aus der erfindungsgemäßen Brandschutzzusammensetzung hergestellten Brandschutzbeschichtung gegenüber mikrobiologischem Befall ist es erforderlich, dass spezielle Verbindungen zugegeben werden, um den auf ein Substrat aufgetragenen Film vor mikrobiologischem Befall zu schützen (Filmkonservierung). Die für die Topfkonservierung gegebenenfalls in dem wässrigen Bindemittel, der Dispersion, enthaltenen Verbindungen, um das wässrige Produkt vor mikrobiologischem Befall zu schützen (Topfkonservierung), reichen hierfür nicht aus. Daher umfasst die Brandschutzzusammensetzung erfindungsgemäß mindestens eine Verbindung zur Verbesserung der Mikroorganismenbeständigkeit. Diese Verbindung wird zusätzlich zu gegebenenfalls bereits in der beschriebenen Dispersion enthaltenen Verbindungen für die Topfkonservierung zu der wässrigen Brandschutzzusammensetzung gegeben, um eine Filmkonservierung zu erreichen.

Als Verbindung zur Verbesserung der Mikroorganismenbeständigkeit in der erfindungsgemäßen Brandschutzzusammensetzung können alle dem Fachmann üblicherweise bekannten Biozide auf Basis von Methylchloroisothioazolinon, Methylisothiazolinon, Benzisothiazolinon, Methylisothiazolinon, 2-Bromo-2-nitropropan-1,3-diol, Bis-(2-Pyridylthio)zink-1,1'-dioxid, Iodopropinyl butylcarbamat und 2-octyl-2H-isothiazol-3-on eingesetzt werden. Beispiele hierfür sind die unter den Handelsnamen Acticide MBS, Acticide MKE-N, Acticide OTA20, Acticide MBL, Acticide IMS2, Acticide LA1209, Acticide L14 und Acticide OTW kommerziell erhältlich Produkte der Fa. Thor.

Erfindungsgemäß ist die Verbindung zur Verbesserung der Mikroorganismenbeständigkeit in der Brandschutzzusammensetzung in einem Anteil von 0,05 Gew.-% bis 0,3 Gew.-% enthalten, um eine Filmkonservierung zu erhalten. Bevorzugt liegt der Anteil an der Verbindung zur Verbesserung der Mikroorganismenbeständigkeit in einem Bereich von 0,10 Gew.-% bis 0,25 Gew.-%, weiter bevorzugt in einem Bereich von 0,1 Gew.-% bis 0,20 Gew.-%, jeweils bezogen auf das Gesamtgewicht der wässrigen Brandschutzzusammensetzung.

Die Zugabe der Verbindung zur Verbesserung der Mikroorganismenbeständigkeit in einer Menge von mehr als 0,3 Gew.-% kann dazu führen, dass die Brandschutzzusammensetzung kennzeichnungspflichtig wird, wodurch der Einsatz der Brandschutzzusammensetzung in manchen Ländern nicht oder nur eingeschränkt möglich ist oder zu einer geringeren Akzeptanz der Kunden führen kann.

Ferner haben die Erfinder herausgefunden, dass in dem genannten Bereich die Brandperformance einer Brandschutzbeschichtung aus der erfindungsgemäßen Brandschutzzusammensetzung nicht negativ beeinflusst wird.

*Weitere Additive und Füllstoffe*

Die folgenden weiteren Additive und/oder Füllstoffe können der erfindungsgemäßen wässrigen Brandschutzzusammensetzung zugesetzt werden.

Als Flammschutzmittel werden Verbindungen zugesetzt, wie Phosphatester, halogenhaltige Verbindungen wie z.B. Tri-(2-chlorisopropyl)-phosphat (TCPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, *Polym. Int.* **2004,** *53*, 1901-1929 beschrieben. Die Flammschutzmittel können bevorzugt in einer Menge von 3 bis 6 Gew.-% enthalten sein.

Die Brandschutzzusammensetzungen enthalten neben der Bindemittelzusammensetzung vorzugsweise weiterhin mindestens ein Pigment und/oder mindestens einen Füllstoff. Aber auch Brandschutzzusammensetzungen, die kein Pigment oder Füllstoff enthalten, sind Teil der Erfindung.

Pigmente im Sinne der vorliegenden Erfindung sind praktisch unlösliche, feindisperse, organische oder vorzugsweise anorganische Farbmittel im Sinne der deutschen Norm DIN 55944. Vorzugsweise enthält die Brandschutzzusammensetzung mindestens ein anorganisches Pigment. Bevorzugt sind anorganische Pigmente, beispielsweise

- Weißpigmente wie Titandioxid (C.I. Pigment White 6), Zinkweiß, Zinkborat, Zinkoxid in Pigmentqualität, Zinksulfid, Lithopone; Bleiweiß; ferner weiße Füllstoffe wie Bariumsulfat und $CaCO_3$ die im Rahmen der vorliegenden Erfindung auch als anorganische Weißpigmente bezeichnet werden,

- Schwarzpigmente, wie Eisenoxidschwarz (C.I. Pigment Black 11), Eisen Manganschwarz, Spinellschwarz (C.I. Pigment Black 7), Ruß oder Flammruß, Farbpigmente, wie Chromoxid, Chromoxidhydratgrün; Chromgrün (C.I. Pigment Green 48); Kobaltgrün (C.I. Pigment Green 50); Ultramaringrün; Kobaltblau (C.I. Pigment Blue 28 und 36); Ultramarinblau, Eisenblau (C.I. Pigment Blue 27), Manganblau, Ultramarinviolett, Kobaltviolett, Manganviolett, $Fe_3O_4$, Eisenoxidrot (C.I. Pigment Red 101); Cadmiumsulfoselenid (C.I. Pigmentrot 108); Molybdatrot (C.I.

- Pigment Red 104); Ultramarinblau,

- Eisenoxidbraun, Mischbraun, Spinell- und Korundphasen (C.I. Pigment Brown 24, 29 und 31 ), Chromorange;

- Eisenoxidgelb (C.I. Pigment Yellow 42); Nickeltitangelb (C.I. Pigment Yellow 53; C.I. Pigment Yellow 157 und 164); Chrom Titangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Wismutvanadat (C.I. Pigment Yellow 184).

Bevorzugte anorganische Pigmente sind ausgewählt aus anorganischen Weißpigmenten, insbesondere Titandioxid, Bariumsulfat und $CaCO_3$.

Die erfindungsgemäßen Brandschutzzusammensetzungen können auch Mischungen aus zwei oder mehreren unterschiedlichen Pigmenten enthalten, wobei es in diesem Fall bevorzugt ist, dass mindestens ein Pigment anorganisch ist. Die Pigmente liegen üblicherweise in partikulärer Form vor, d.h. in Form von Partikeln. Pigmente können aus Rohpigmenten ausgewählt werden, d.h. unbehandelten, wie synthetisierten Pigmenten. Die Pigmentteilchen können von regelmäßiger oder unregelmäßiger Form sein, indem die Teilchen beispielsweise eine im Wesentlichen sphärische Form oder eine Nadel-Form haben können.

In einer Ausführungsform der vorliegenden Erfindung weist das Pigment ein ausgeprägtes Ungleichverhältnis von Länge zu Durchmesser auf mit einer mittleren Teilchenlänge (Median, d50) im Bereich von 1 bis 50 $\mu$m, bevorzugt im Bereich von 2 bis 20 $\mu$m und besonders bevorzugt im Bereich von 5 bis 15 $\mu$m und einem Verhältnis der Partikellänge zum kleinsten Durchmesser von mindesten 2:1, bevorzugt 10:1 bis 20:1 und besonders bevorzugt bei größer 20:1. In einer Ausführungsform der vorliegenden Erfindung liegt das Pigment in kugeliger oder im Wesentlichen kugelförmiger Form vor, d.h. das Verhältnis des längsten Durchmessers zum kleinsten Durchmesser liegt im Bereich von 1,0 bis 2,0, vorzugsweise bis 1,5. In einer Ausführungsform der vorliegenden Erfindung weist das Pigment einen mittleren Teilchendurchmesser (Median, d50) im Bereich von 20 bis 50 $\mu$m, bevorzugt im Bereich von 50 bis 20 $\mu$m und besonders bevorzugt bis maximal 5 $\mu$m auf, gemessen z. B. durch einen Coulter-Zähler oder mit einem Hegman-Messgerät.

Beispiele geeigneter Füllstoffe sind Alumosilikate, wie Feldspäte, Silikate, wie Kaolin, Talk, Glimmer, Magnesit, Erdalkalimetallcarbonate, wie Calciumcarbonat, beispielsweise in Form von Calcit oder Kreide, Magnesiumcarbonat, Dolomit, Erdalkali Metallsulfate, wie Calciumsulfat, Siliciumdioxid, Attapulgit, oder auch Glaskugeln, Hohlglaskugeln, Glaspulver, expandiertes offen- oder geschlossenzelliges Glaspulver, Perlite, Basalt, Bims, etc. In den erfindungsgemäßen Beschichtungszusammensetzungen sind naturgemäß feinteilige Füllstoffe bevorzugt. Die Füllstoffe können in Form von Einzelkomponenten eingesetzt werden. In der Praxis haben sich jedoch insbesondere Füllstoffmischungen bewährt, beispielsweise Calciumcarbonat/Kaolin, Calciumcarbonat/Talkum. Zu den Füllstoffen zählen auch Mattierungsmittel, die den Oberflächenglanz falls gewünscht deutlich beeinträchtigen können. Beispiele für Mattierungsmittel sind anorganische Silikate, beispielsweise die Marken Syloid® von WR Grace & Company und die Marken Acematt® von Evonik GmbH. Organische Mattierungsmittel sind beispielsweise von der BYK-Chemie GmbH unter den Marken Ceraflour ® und den Marken Ceramat ® und von der Deuteron GmbH unter der Marke Deuteron MK ® erhältlich.

Der Anteil der Pigmente und Füllstoffe in Beschichtungsmitteln kann in an sich bekannter Weise über die Pigmentvolumenkonzentration (PVK) beschrieben werden. Die PVK beschreibt das Verhältnis des Volumens an Pigmenten (VP) und Füllstoffen (VF) zum Gesamtvolumen, bestehend aus den Volumina an Bindemittel (VB), Pigmenten (VP) und Füllstoffen (VF) in einer getrockneten Beschichtung in Prozent: PVC = (VP + VF) $\times$ 100 / (VP + VF + VB).

Die Brandschutzzusammensetzungen weisen üblicherweise eine Pigmentvolumenkonzentration (PVK) von mindestens 5, insbesondere mindestens 10 auf. Vorzugsweise wird die PVC einen Wert von 60, insbesondere 40, nicht überschreiten und liegt insbesondere im Bereich von 5 bis 60 oder 5 bis 40. Die erfinderischen Wirkungen der Polymerdispersionen zeigen sich aber auch in Beschichtungen, die typischerweise einen Pigment-/Füllstoffgehalt unter 5 Gew.-%, bezogen auf das Beschichtungsmittel, aufweisen und dementsprechend einen PVC unter 5 aufweisen.

Die erfindungsgemäßen wässrigen Brandschutzzusammensetzungen können außerdem übliche Hilfsstoffe enthalten. Die üblichen Hilfsstoffe hängen in bekannter Weise von der Art der Beschichtung ab und beinhalten, sind aber nicht beschränkt auf: Rheologiemodifizierungsmittel, Netz- oder Dispergiermittel, Filmbildehilfsmittel, Verlaufmittel, Biozide, Entschäumer und mindestens eine intumeszierend wirkende Füllstoffkombinationen enthaltend mindestens Melamin (Treibmittel), Ammoniumpolyphosphat (Säurespender) und Polyalkohol (Kohlenstoffquelle). Letztere intumeszierende Füllstoffkombinationen sind allgemein bekannt, beispielsweise aus "Die Aktuelle-Wochenschau der GDCh - Bauen und Chemie 32/2011", René Gries, "Brandschutz - ein interessantes, vielfältiges Anwendungsgebiet der Bauchemie" und sind kommerziell erhältlich, beispielsweise als Charmor™ PM40 (Perstorp AB, SE-284 80 Perstorp, Sweden), als Melafine® (OCI N.V. Amsterdam, NL) oder als Exolit® AP 462 (Clariant, Muttenz, Schweiz).

Geeignete rheologiemodifizierende Mittel schließen assoziative Verdickerpolymere und nicht-assoziative rheologiemodifizierende Mittel ein. Geeignete assoziative Verdickerpolymere umfassen anionische assoziierte Verdicker wie hydrophob modifizierte Acrylat-Verdicker, auch als HASE-Verdicker bezeichnet, und nichtionische assoziative Verdicker, auch als assoziative Verdicker vom NiSAT-Typ bezeichnet, einschließlich der hydrophob modifizierten Polyethylenoxid-Urethan-Rheologie-Modifizierer, auch als HEUR- oder PUR-Verdicker bezeichnet, bzw. hydrophob modifizierte Polyethylenoxide, die auch als HMPE bezeichnet werden. Als nicht assoziative Rheologiemodifikatoren eignen sich insbesondere Verdicker auf Cellulosebasis, insbesondere Hydroxyethylcellulose, aber auch Verdicker auf Basis von Acrylatemulsionen (ASE). Bevorzugt werden nicht-assoziative Verdickungsmittel auf Cellulosebasis. Die Menge des Verdickerpolymers richtet sich nach dem gewünschten Viskositätsprofil und liegt häufig im Bereich von 0,05 bis 2,5 Gew.-%, insbesondere 0,1 bis 2 Gew.-% Verdicker und insbesondere 0,15 bis 1,5 Gew.- %, bezogen auf das Beschichtungsmittel. Weiterhin sind anorganische Verdicker geeignet, wie z.B. Attapulgit, ein hydratisiertes Magnesiumaluminosilikat und ein Hauptmitglied der Familie der Fuller-Erden (Tonmineralien) mit der idealen Formel:

$$3MgO - 1{,}5AL_2O_3 - 8SiO_2 - 9H_2O.$$

Fuller-Erde ist bekannt als jedes Tonmaterial, das Öl oder andere Flüssigkeiten ohne den Einsatz einer aggressiven chemischen Behandlung entfärben kann. Fullers Erde besteht typischerweise aus Palygorskit (Attapulgit) oder Bentonit. Das stark thixotrope Verhalten dieser Attapulgite sorgt für eine verbesserte Synäresekontrolle und reduzierte Absetzneigung, ohne die Nivellierung und den Filmaufbau des Beschichtungsmittels negativ zu beeinträchtigen.

Geeignete Netz- oder Dispergiermittel sind beispielsweise Natriumpolyphosphate, Kaliumpolyphosphate oder Ammoniumpolyphosphate, Alkalimetallsalze und Ammoniumsalze von Acrylsäure-Copolymeren oder Maleinsäureanhydrid-Copolymeren oder Polyphosphonate.

Als Filmbildehilfsmittel eignen sich Lösungsmittel und Weichmacher. Weichmacher haben im Gegensatz zu Lösungsmitteln eine geringe Flüchtigkeit und haben vorzugsweise einen Siedepunkt bei 1013 mbar von mehr als 250°C, während Lösungsmittel eine höhere Flüchtigkeit als Weichmacher haben und vorzugsweise einen Siedepunkt von weniger als 250°C bei 1013mbar haben. Geeignete Filmbildehilfsmittel sind beispielsweise Testbenzin, Pine Oil, Propylenglycol, Ethylenglycol, Butylglycol, Butylglycolacetat, Butylglycoldiacetat, Butyldiglycol, Butylcarbitol, 1-Methoxy-2-propanol, 2,2,2-Trimethyl-1,3-pentandiolmonoisobutyrat (Texanol®) und die Glykolether und -ester, kommerziell erhältlich beispielsweise von BASF SE unter der Bezeichnung Solvenon® und Lusolvan®-Namen und von Dow unter dem Handelsnamen Dowanol®. Vorzugsweise beträgt die Menge < 10 Gew.-% und besonders bevorzugt < 5 Gew.-%, bezogen auf die Gesamtformulierung. Die Formulierung ist auch ganz ohne Lösungsmittel möglich. Weitere Formulierungsbestandteile für wässrige Beschichtungen sind ausführlich beschrieben in M. Schwartz und R. Baumstark "Acrylate auf Wasserbasis für dekorative Beschichtungen", Curt R. Vincentz Verlag, Hannover, 2001, S. 191-212 (ISBN 3-87870-726-6).

Die erfindungsgemäße Brandschutzzusammensetzung kann mindestens ein Verlaufsmittel umfassen. Der Begriff Verlaufsmittel im Sinne der vorliegenden Erfindung beschreibt eine Verbindung mittels derer die Viskosität der Brandschutzzusammensetzung abgesenkt wird. Die Zugabe eines Verlaufsmittels ermöglicht den Einsatz sehr hoher Feststoffanteile in der Brandschutzzusammensetzung ohne Beeinträchtigung der Oberflächeneigenschaften, insbesondere der Oberflächenrauigkeit, einer Beschichtung, die aus der entsprechenden Brandschutzzusammensetzung hergestellt wurde. Optional wird der Verlauf durch die Erhöhung der Oberflächenspannung durch das Verlaufsmittel bewirkt. Vorzugsweise kommen als Verlaufsmittel Silikon-basierte Verbindungen (PDMS polydimethylsiloxane modified), Fluorcarbonbasierte Verbindungen (modified fluorocarbons), Acrylat basierte Verbindungen (Polyacrylate), oder Kohlenhydrat basierte Produkte zum Einsatz. Beispielhaft seien hier die kommerziell erhältlichen Produkte BYK 3760, Modaflow® AQ3000, Modaflow® AQ3025 und Afcone 3034 genannt. Die Verlaufsmittel können bevorzugt in einer Menge von 0,1% bis 2,0% Gew.-%, bevorzugt 0,3% bis 1,5% Gew.-% in der Brandschutzzusammensetzung enthalten sein bezogen auf das Gesamtgewicht der Brandschutzzusammensetzung.

Zusätzliche Additive wie Verdicker, Rheologieadditive und Füllstoffe können der Brandschutzzusammensetzung zugegeben werden und verbessern die Lagerstabilität der Formulierung signifikant. Um den "Hold up" (Schichtdicke, die mit einem Applikationsvorgang aufgebracht werden kann) in der Brandschutzzusammensetzung zu verbessern, sind geeignete Verdicker und Rheologieadditive hilfreich. Außerdem helfen diese Additive die Lagerstabilität deutlich zu verbessern. Als Rheologieadditive, wie AntiAbsetzmittel, Antiablaufmittel und Thixotropiemittel, werden vorzugsweise Methyl Cellulose, Hydroxyethyl Cellulose, Carboxymethyl Cellulose, Hydroxypropyl Cellulose, hydrophob modifizierte hydroxyethyl Cellulose, Alkali schwellbare Emulsionen, hydrophobe Alkali schwellbare Emulsionen, hydrophob modifizierte ethoxylierte Urethan-Copolymere, hydrophob modifizierte Cellulose Ether, Hectorite Lehm oder Attapulgit. Weiterhin sind organische sogenannte low-shear Verdicker in der Lage, den Hold up deutlich zu steigern. Geeignete assoziative Verdickerpolymere umfassen anionische assoziierte Verdicker wie hydrophob modifizierte Acrylat-Verdicker, auch als HASE-Verdicker bezeichne. Beispiele von kommerziell erhältlichen Verdickungsmitteln sind Natrosol® 250HHR, Aqualon® 9M31F, Benton® Gel 1002v, Natrosol® Plus 330, Acrysol® TT-615, Acrysol® ASO-60ER, Attagel® 50, Rheovis® HS 1162 oder Rheovis® PU 1191.

Die erfindungsgemäße Brandschutzzusammensetzung kann zusätzlich gegebenenfalls übliche Hilfsmittel, wie Lösungsmittel, etwa Xylol oder Toluol, oder Texanol enthalten. Die Nutzung von Texanol ist durch seinen vergleichsweisen hohen Siedepunkt hilfreich, um den Verdampfungspunkt zu senken. Zudem eignet sich die Zugabe eines Lösungsmittels sehr gut, um die Sprühbarkeit des Produkts zu verbessern, da die Viskosität der Formulierung, wie allseits bekannt ist, durch die Zugabe von Lösungsmittel verringert wird.

*Konfektionierung*

Die erfindungsgemäße wässrige Brandschutzzusammensetzung kann als Ein- oder Mehrkomponenten-System konfektioniert werden, wobei ein Mehrkomponenten-System auch ein Zweikomponenten-System, welches bevorzugt ist, umfasst.

Bei einem Einkomponenten-System sind alle Bestandteile der wässrigen Bindemittelzusammensetzung in einer einzigen Komponente enthalten.

Bei einem Zweikomponenten-System sind die Bestandteile der wässrige Brandschutzzusammensetzung auf die beiden Komponenten aufgeteilt.

Die in der wässrigen Brandschutzzusammensetzung enthaltenen Bestandteile sind entsprechend ihrer Funktion und/oder ihrer Verträglichkeit untereinander und mit den in der Brandschutzzusammensetzung enthaltenen Verbindungen aufgeteilt und können in einer der beiden Komponenten oder in beiden Komponenten enthalten sein. Ferner kann die Aufteilung der weiteren Additive und Füllstoffe, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben.

In einer Ausführungsform eines bevorzugten Zweikomponenten-Systems ist die erfindungsgemäße Brandschutzzusammensetzung so konfektioniert, dass das wässrige Bindemittel als erste Komponente sowie das intumeszierend wirkende Brandschutzadditiv als zweite Komponente dient. Weitere mögliche Additive können sowohl in der ersten als auch in der zweiten Komponente oder in beiden enthalten sein.

In einer alternativen Ausführungsform eines bevorzugten Zweikomponenten-Systems ist die erfindungsgemäße Brandschutzzusammensetzung so konfektioniert, dass das wässrige Bindemittel als erste Komponenten, die zusätzlich einen Teil des intumeszierend wirkenden Brandschutzadditivs enthält, und der übrige Teil des intumeszierend wirkenden Brandschutzadditivs als zweite Komponente dient. Weitere mögliche Additive können ebenfalls sowohl in der ersten als auch in der zweiten Komponente oder in beiden enthalten sein.

Die erfindungsgemäße Brandschutzzusammensetzung ist besonders als Beschichtung für bauliche Zwecke, insbesondere als Brandschutzbeschichtung, bevorzugt als sprühbare Beschichtung für Substrate auf metallischer und nicht metallischer Basis geeignet. Die Brandschutzzusammensetzung kann auf Oberflächen wie beispielsweise Metall, Asphalt, Beton, Faserplatten, Stein, Keramik, Mineralien, Holz, Kunststoff, Polymer und Glas aufgetragen werden. Die Brandschutzzusammensetzung kann auf architektonische Konstruktionsbauteile oder Teile der technischen Gebäudeausrüstung aufgetragen werden, beispielsweise und nicht beschränkt auf Träger, Unterzüge, Kabelschächte, Lüftungsrohre, wasser- oder stromführende Leitungen, oder Verkleidungen. Vorzugsweise kann die Brandschutzzusammensetzung auf statisch belastete Konstruktionsbauteile in Gebäuden aufgetragen werden. Die Anwendung kann im Innen- und Außenbereich von Gebäuden erfolgen.

Ein weiterer Gegenstand der vorliegenden Erfindung ist daher eine Beschichtung hergestellt aus der erfindungsgemäßen Brandschutzzusammensetzung, sowie ein Substrat umfassend eine erfindungsgemäße Beschichtung bzw. eine erfindungsgemäßen Brandschutzzusammensetzung.

Die erfindungsgemäße Brandschutzzusammensetzung findet vor allem im Baubereich als Beschichtung für bauliche Zwecke, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Brandschutzzusammensetzung als Beschichtung, insbesondere als Beschichtung von metallischen und/oder nicht metallischen Substraten, ganz besonders für Konstruktionselemente oder Bauelemente aus Stahl, Beton, Holz und anderen Materialien, wie etwa Kunststoffe, insbesondere als Brandschutzbeschichtung, jeweils für bauliche Zwecke.

Eine weiterer Gegenstand der Erfindung sind Verfahren zur Herstellung einer BrandschutzBeschichtung auf einer Oberfläche umfassend

(a) Aufbringen der erfindungsgemäßen Brandschutzzusammensetzung auf die Oberfläche, und

(b) Trocknen lassen der Brandschutzzusammensetzung zur Herstellung der Beschichtung.

Die Brandschutzzusammensetzung kann auf zu beschichtende Oberflächen und/oder Substrate in üblicher Weise aufgebracht werden, wie beispielsweise durch Auftragen der Farbe mit Pinseln oder Rollen, durch Spritzen, durch Tauchen, durch Rollen oder durch Rakeln. Bevorzugt wird die Brandschutzzusammensetzung mittels eines Airless-Sprühverfahrens aufgebracht. Die Beschichtung von Oberflächen und/oder Substraten erfolgt in der Weise, dass die Oberfläche und/oder das Substrat zunächst mit einer erfindungsgemäßen Brandschutzzusammensetzung beschichtet wird und anschließend die wässrige Brandschutzzusammensetzung einem Trocknungsschritt unterzogen wird.

Das Substrat kann vor der Beschichtung mit einer geeigneten Grundierung versehen werden. Dies kann zum Ziel haben, die Haftung der erfindungsgemäßen Brandschutzzusammensetzung zum Substrat zu verbessern und/oder eine zusätzliche korrosionsverhindernde Zwischenschicht aufzubringen.

Die folgenden Beispiele dienen der weiteren Erläuterung der Erfindung.

**AUSFÜHRUNGSBEISPIELE**

Für die Herstellung von erfindungsgemäßen Zusammensetzungen werden Formulierungen mit den in Tabelle 1 angegeben Einzelkomponenten mit einem Dissolver vermengt und homogenisiert.

Zur Herstellung der erfindungsgemäßen Formulierungen sowie der Vergleichsformulierungen wurden folgende Bestandteile verwendet:

| Bestandteil | Beschreibung | Hersteller |
|---|---|---|
| Acrylatdispersion | wässrigen Polymerlatex eines filmbildenden carboxylierten Polymers mit einem verzweigten Polyetheraminpolyol | BASF |
| Kronos 2056 | Titandioxid | Kronos International, Inc. |
| Melafine | Melamin | OCI Nitrogen |
| Charmor PM40 | Pentaerythritolderivat | Perstorp Chemicals GmbH |
| Exolit AP422 Exolit AP435 Exolit AP462 | Ammoniumpolyphosphat, unbeschichtet Ammoniumpolyphosphat, unbeschichtet Ammoniumpolyphosphat, beschichtet mit Melaminharz | Clariant |
| Cab-o-sil® TS720 | pyrogene Kieselsäure | Cabot Corporation |
| Rockforce MS603 | Mineralfasern | Lapinus |
| Polwhite® E | Kaolin | Imerys Minerals Ltd. |
| Serdas DF7010 | hydrophobes Wachs in Mineralölen | KLK Oleo |
| Dispex CX 4231 | Ammoniumsalz eines Carboxylsäure-Copolymer in Wasser | BASF |
| Foamstar SI 2210 | Mischung aus speziell modifizierten Alkoholen und einem Polysiloxan-Addukt | BASF |
| Disperbyk 199 | Lösung eines modifizierten Styrol-Maleinsäure-Copolymers | BYK-Chemie GmbH |
| Lutensol AT 18 20% | nichtionisches Tensid, ca. 20 % aktiv, es handelt sich um Alkylpolyethylenglykolether, der aus einem linearen, gesättigten C16C18-Fettalkohol mit 18 Molen Ethylenoxid hergestellt wird | BASF |
| Acticide MBS | Verbindung basierend auf 1,2-Benzisothiazol-3(2H)-on und 2-Methyl-2H-isothiazol-3-on | Thor |
| Natrosol 250 HHR | Hydroxyethylcellulose | Ashland |
| Attagel 50 | inerter, pulverförmiger, gelierender Attapulgit-Ton | BASF |
| Rheovis PU1191 | Lösung eines Polyurethans in Wasser/Verdünnungsmittel | BASF |
| [1] Ammoniumpolyphosphat verschiedener Modifikationen bezüglich Wasserlöslichkeit | | |

Für Brandtests wurden Proben hergestellt, in dem eine Stahlplatte (280 mm x 280 mm x 5 mm) mit der jeweiligen Formulierung mit den in Tabelle 1 gezeigten Bestandteilen beschichtet wurde. Die Schichtdicke der aufgetragenen Formulierungen betrug 1,3 bzw. 2,6 mm. Nach Aufbringen wurden die aufgebrachte Schicht mindestens 10 Tage bei 22 °C gelagert, bevor der Brandtest durchgeführt wurde.

Die Rückseite der Stahlplatten war mit jeweils drei Thermoelementen versehen, welche die Temperatur auf der dem Feuer abgewandten Seite aufzeichneten und über welche das arithmetische Mittel gebildet wurde. Die Proben wurden einem Brandtest unterworfen, indem sie in die Wand eines Ofens eingebaut wurden, welcher von innen befeuert wurde. Die Heizrate des Ofens entsprach der in ISO 834 beschriebenen Rate. Die Zeit, bis eine Temperatur von 538°C auf der rückseitigen Stahloberfläche erreicht wurde, die auch als "Zeit bis zum Versagen" (Time to Failure) bezeichnet wird entspricht dabei dem Wert TTF (538°C/1,3mm), respektive TTF (538°C/2,6mm). Die Werte sind in Tabelle 1 gezeigt.

Wie aus Tabelle 1 ersichtlich ist, kann durch die Zugabe von Fasern der TTF-Wert, insbesondere bei einer Schichtdicke von 2,6 mm deutlich verbessert werden (Vergleichsbeispiel 1 und Beispiel 1). Die Ergebnisse der Beispiele 2 und 3 zeigen, dass die Zugabe des Fungizids keinen wesentlichen negativen Einfluss auf die Brandperformance (TTF-Wert) hat

Tabelle 1: Bestandteile der Brandschutzzusammensetzungen des Vergleichsbeispiels 1 und der Bespiele 1 bis 3 sowie Ergebnisse der Brandtests

| Material | Vergleich 1 [Gew.-%] | Beispiel 1 [Gew.-%] | Beispiel 2 [Gew.-%] | Beispiel 3 [Gew.-%] |
|---|---|---|---|---|
| Acrylatdispersion | 38,30 | 38,30 | 39,46 | 35,50 |
| Kronos 2056 | 8,54 | 8,63 | 8,60 | 9,18 |
| Melafine | 9,41 | 8,63 | 8,60 | 9,18 |
| Charmor PM40 | 9,41 | 8,63 | 8,60 | 9,18 |
| Exolit AP435 | | | 30,1 | 32,12 |
| Exolit AP462 | 29,99 | 30,18 | | |
| Cab-o-sil® TS720 | | 0,54 | 0,54 | 0,58 |
| Polwhite® E | 1,94 | 2,15 | 2,15 | 2,29 |
| Serdas DF7010 | | | 0,54 | 0,58 |
| Dispex CX 4231 | 1,20 | 1,20 | | |
| Foamstar SI 2210 | 0,20 | 0,20 | | |
| Disperbyk 199 | | | 0,65 | 0,69 |
| Lutensol AT 18 20% | 0,50 | 0,50 | | |
| Acticide MBS | | | 0,11 | 0,12 |
| Natrosol 250 HHR | | | 0,11 | |
| Attagel 50 | 0,30 | 0,30 | | |
| Rheovis PU1191 | 0,20 | 0,20 | | |
| Rockforce MS603 | | 0,54 | 0,54 | 0,58 |
| Acticide MBS | | | 0,11 | 0,12 |
| | | | | |
| **TTF 1,3 mm** | **43 min** | **57 min** | **51 min** | **55 min** |
| **TTF 2,6 mm** | **37 min** | **85 min** | **74 min** | **77 min** |

## Patentansprüche

**1.** Wässrige Brandschutzzusammensetzung umfassend ein Polymer als wässriges Bindemittel, welches einen

(a) wässrigen Polymerlatex eines filmbildenden carboxylierten Polymers;
(b) 0,05 bis 7,5 Gew.%, bezogen auf das Trockengewicht des carboxylierten Polymers, eines verzweigten Polyetheraminpolyols, gelöst in der wässrigen Phase des Polymerlatex, wobei mindestens 90% aller Aminogruppen in dem verzweigten Polyetheraminpolyol tertiäre Amingruppen sind, und
wobei der wässrige Polymerlatex des carboxylierten Polymers erhältlich ist durch eine radikalische Emulsionspolymerisation einer Monomerzusammensetzung M, wobei die Monomerzusammensetzung M umfasst,

i) 70 Gew.-% bis 99,95 Gew.-%, bezogen auf das Gesamtgewicht der Monomerzusammensetzung M, eines oder mehrerer ethylenisch ungesättigter Monomere M1, die ausgewählt sind aus $C_1$-$C_{20}$-Alkylestern von monoethylenisch ungesättigten Monocarbonsäuren mit 3 bis 6 Kohlenstoffatomen, di-$C_1$-$C_{20}$-Alkylester von monoethylenisch ungesättigten Dicarbonsäuren mit 4 bis 6 C-Atomen, $C_5$-$C_{20}$-Cycloalkylester von mono-ethylenisch ungesättigte Monocarbonsäuren mit 3 bis 6 C-Atomen, Vinylester von $C_1$-$C_{20}$-Alkansäuren, vinylaromatische Monomere, $C_2$-$C_6$-Monoolefine und Butadien;
ii) 0,05 Gew.-% bis 10 Gew.-%, bezogen auf das Gesamtgewicht der Monomerzusammensetzung M, eines oder mehrerer monoethylenisch ungesättigter Monomere M2, die ausgewählt sind aus monoethylenisch ungesättigten Monocarbonsäuren mit 3 bis 6 Kohlenstoffatomen und monoethylenisch ungesättigten Dicarbonsäuren Säuren mit 4 bis 6 Kohlenstoffatomen;

iii) 0 Gew.-% bis 20 Gew.-%, bezogen auf das Gesamtgewicht der Monomerzusammensetzung M, eines oder mehrerer nichtionischer Monomere M3, die von den Monomeren M1 verschieden sind, umfasst,

mindestens ein intumeszierend wirkendes Brandschutzadditiv und mindestens eine Verbindung zur Verbesserung der Mikroorganismenbeständigkeit, wobei der Anteil der Verbindung zur Verbesserung der Mikroorganismenbeständigkeit von 0,05 bis 0,30 Gew.- %, bezogen auf das Gesamtgewicht der wässrigen Brandschutzzusammensetzung, beträgt.

2. Wässrige Brandschutzzusammensetzung nach Anspruch 1, wobei das intumeszierend wirkende Brandschutzadditiv ferner anorganische Fasern umfasst.

3. Wässrige Brandschutzzusammensetzung nach Anspruch 2, wobei der Anteil an anorganischen Fasern von 0,3 bis 15 Gew.-% , bezogen auf das Gesamtgewicht der wässrigen Brandschutzzusammensetzung beträgt.

4. Wässrige Brandschutzzusammensetzung nach einem der vorhergehenden Ansprüche, wobei der Anteil des wässrigen Bindemittels 20 Gew.-% bis 45 Gew.-%, bezogen auf das Gesamtgewicht der Brandschutzzusammensetzung, beträgt.

5. Wässrige Brandschutzzusammensetzung nach einem der vorhergehenden Ansprüche, wobei der Anteil des intumeszierend wirkenden Brandschutzadditivs 30 Gew.- % bis 80 Gew.-%, bezogen auf das Gesamtgewicht der wässrigen Brandschutzzusammensetzung, beträgt.

6. Wässrige Brandschutzzusammensetzung nach einem der vorhergehenden Ansprüche, wobei das intumeszierend wirkende Brandschutzadditiv mindestens einen Dehydrierungskatalysator und mindestens einen Gasbildner umfasst.

7. Wässrige Brandschutzzusammensetzung nach Anspruch 6, wobei das intumeszierend wirkende Brandschutzadditiv ferner einen Kohlenstofflieferanten umfasst.

8. Wässrige Brandschutzzusammensetzung nach einem der Ansprüche 6 oder 7, wobei das intumeszierend wirkende Brandschutzadditiv ferner einen Aschekrustenstabilisator umfasst.

9. Wässrige Brandschutzzusammensetzung nach einem der vorhergehenden Ansprüche, wobei die Verbindung zur Verbesserung der Mikroorganismenbeständigkeit Biozide auf Basis von Methylchloroisothioazolinon, Methylisothiazolinon, Benzisothiazolinon, Methylisothiazolinon, 2-Bromo-2-nitropropan-1,3-diol, Bis-(2-Pyridylthio)zink-1,1-dioxid, Iodopropinyl butylcarbamat und 2-octyl-2H-isothiazol-3-on umfasst.

10. Wässrige Brandschutzzusammensetzung nach einem der vorhergehenden Ansprüche, wobei die Brandschutzzusammensetzung als Zwei- oder Mehrkomponenten-System konfektioniert ist.

11. Brandschutzbeschichtung hergestellt aus einer wässrigen Brandschutzzusammensetzung nach einem der Ansprüche 1 bis 10.

12. Brandschutzbeschichtung nach Anspruch 11, wobei die wässrige Brandschutzzusammensetzung mittels eines Airless-Sprühverfahrens auf ein Substrat, vorzugsweise auf ein metallisches Substrat, aufgebracht wird.

13. Substrat umfassend eine Brandschutzbeschichtung nach einem der Ansprüche 11 oder 12.

14. Verwendung einer wässrigen Brandschutzzusammensetzung nach einem der Ansprüche 1 bis 10 für den Brandschutz.

15. Verwendung einer wässrigen Brandschutzzusammensetzung nach einem der Ansprüche 1 bis 10 für Beschichtungen von Bauteilen.

Europäisches
Patentamt

European
Patent Office

Office européen
des brevets

# EUROPÄISCHER RECHERCHENBERICHT

Nummer der Anmeldung

EP 23 21 7030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/046280 A1 (BASF SE [DE]; IYER SRIDHAR G [US]) 11. März 2021 (2021-03-11) <br> * Seite 1, Zeile 20 – Seite 3, Zeile 7 * <br> * Seite 22, Zeile 17 – Zeile 32 * <br> * Seite 33, Zeile 8 – Seite 34, Zeile 4 * <br> * Zusammenfassung; Ansprüche 1–71; Abbildung 1; Beispiele 1–5; Tabellen 1–3 * | 1–15 | INV. <br> C09D5/18 |
| X | US 2017/355844 A1 (KALSANI VENKATESHWARLU [US] ET AL) 14. Dezember 2017 (2017-12-14) <br> * Absatz [0004] – Absatz [0008] * <br> * Absatz [0016] – Absatz [0029] * <br> * Absatz [0071] – Absatz [0074] * <br> * Zusammenfassung; Ansprüche 1–20; Beispiele A – C; Tabellen 1–4 * | 1–15 | |
| X | DE 10 2011 076862 A1 (HENKEL AG & CO KGAA [DE]) 6. Dezember 2012 (2012-12-06) <br> * Absatz [0008] – Absatz [0025] * <br> * Zusammenfassung; Ansprüche 1–12; Beispiel 1 * | 1–15 | |
| X | WO 2009/102409 A1 (DOW GLOBAL TECHNOLOGIES INC [US]; SHAY GREGORY D [US] ET AL.) 20. August 2009 (2009-08-20) <br> * Seite 2, Zeile 1 – Seite 3, Zeile 7 * <br> * Seite 13, Zeile 18 – Zeile 23 * <br> * Zusammenfassung; Ansprüche 1–10; Abbildungen 1–10; Beispiele 1–16; Tabellen 1–7 * | 1–15 | RECHERCHIERTE SACHGEBIETE (IPC) <br><br> C09D |

Der vorliegende Recherchenbericht wurde für alle Patentansprüche erstellt

| Recherchenort | Abschlußdatum der Recherche | Prüfer |
|---|---|---|
| München | 8. März 2024 | Glomm, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 21 7030

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2024

| Im Recherchenbericht angeführtes Patentdokument | Datum der Veröffentlichung | Mitglied(er) der Patentfamilie | | Datum der Veröffentlichung |
|---|---|---|---|---|
| WO 2021046280 A1 | 11-03-2021 | CN | 114341285 A | 12-04-2022 |
| | | EP | 4025656 A1 | 13-07-2022 |
| | | US | 2022332969 A1 | 20-10-2022 |
| | | WO | 2021046280 A1 | 11-03-2021 |
| US 2017355844 A1 | 14-12-2017 | CA | 3026964 A1 | 14-12-2017 |
| | | CN | 109476787 A | 15-03-2019 |
| | | DK | 3469011 T3 | 01-02-2021 |
| | | EP | 3469011 A1 | 17-04-2019 |
| | | JP | 2019522701 A | 15-08-2019 |
| | | KR | 20190016573 A | 18-02-2019 |
| | | RU | 2019100016 A | 13-07-2020 |
| | | SG | 11201810533X A | 28-12-2018 |
| | | US | 2017355844 A1 | 14-12-2017 |
| | | WO | 2017211852 A1 | 14-12-2017 |
| DE 102011076862 A1 | 06-12-2012 | CN | 103562283 A | 05-02-2014 |
| | | DE | 102011076862 A1 | 06-12-2012 |
| | | EP | 2714782 A2 | 09-04-2014 |
| | | US | 2014087088 A1 | 27-03-2014 |
| | | WO | 2012163678 A2 | 06-12-2012 |
| WO 2009102409 A1 | 20-08-2009 | AR | 070381 A1 | 31-03-2010 |
| | | BR | PI0908830 A2 | 28-07-2015 |
| | | CN | 101952376 A | 19-01-2011 |
| | | EP | 2242808 A1 | 27-10-2010 |
| | | ES | 2422755 T3 | 13-09-2013 |
| | | US | 2011097503 A1 | 28-04-2011 |
| | | WO | 2009102409 A1 | 20-08-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019099372 A1
- DE 3206459 A1
- EP 441198 A2
- WO 2009047269 A2
- WO 2014012812 A1
- US 20110168045 A
- WO 2009060060 A1
- WO 2009112379 A1
- DE 4003422 A
- US 4269749 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- EP 3910034 A1
- GB 2007689 A1
- EP 139401 A1
- US 3969291 A1
- US 4442157 A
- US 3562197 A
- GB 755551 A
- EP 138546 A1

**In der Beschreibung aufgeführte Nicht-Patentliteratur**

- **T.G. FOX**. *Bull. Am. Phys. Soc.*, 1956, vol. 1, 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- **J. BRANDRUP** ; **EH IMMERGUT**. Polymer Handbook. J. Wiley, 1966
- **J. BRANDRUP, EH IMMERGUT**. Polymer Handbook. J. Wiley, 1975
- **J. BRANDRUP, EH IMMERGUT**. Polymer Handbook. J. Wiley
- Emulsionspolymerisation'' [Emulsion Polymerisation. Encyclopedia of Polymer Science and Engineering. 1987, vol. 8, 659
- **DC BLACKLEY**. *High Polymer Latices*, 1966, vol. 1, 35
- **H. WARSON**. The Applications of Synthetic Resin Emulsions. 1972, 246 ff
- **D. DIEDERICH**. *Chemie in unserer Zeit*, 1990, vol. 24, 135-142
- Emulsionspolymerisation. Interscience Publishers, 1965
- **F. HOLSCHER**. Dispersionen synthetischer Hochpolymerer. Springer-Verlag, 1969
- Schwefelverbindungen. **J. BRANDRUP** ; **E.H. IMMERGUT**. Polymer Handbook. John Wiley & Sons, 1989, 133-141
- Methoden der organischen Chemie. **HOUBEN-WEYL**. Makromolekulare Stoffe. Georg-Thieme-Verlag, 1961, vol. XIV/1, 192-208
- **M. SCHWARTZ** ; **R. BAUMSTARK**. Acrylate auf Wasserbasis für dekorative Beschichtungen. Curt R. Vincentz Verlag, 2001, 191-212